# EUROPEAN PATENT SPECIFICATION

(11) **EP 0 135 280 B1**
(45) Date of publication and mention of the grant of the patent: **12.05.1993**
(21) Application number: 84304756.4
(22) Date of filing: 11.07.1984
(51) Int. Cl.: C08F 4/00, C08F 291/00

(54) **New polymerization process and polymers produced thereby**
Verfahren zur Polymerisation und nach diesem Verfahren hergestellte Polymere
Procédé de polymérisation et polymères ainsi produits

(30) Priority: 11.07.1983 AU 223/83; 11.07.1983 AU 224/83; 11.07.1983 AU 225/83; 10.02.1984 AU 3578/84
(43) Date of publication of application: 27.03.1985
(73) Proprietor: COMMONWEALTH SCIENTIFIC AND INDUSTRIAL RESEARCH ORGANISATION, Dixon Australian Capital Territory 2602 (AU)
(72) Inventor: Solomon, David Henry, Glen Waverley (AU); Rizzardo, Ezio, Wheelers Hill (AU); Cacioli, Paul, Reservoir (AU)
(74) Representative: Lawrence, Peter Robin Broughton

(56) References cited:
- US-A- 2 935 489
- US-A- 3 163 677

## Description

The present invention relates generally to improved processes for free radical polymerization, particularly to improved processes in which it is possible to control the growth steps of the polymerization to produce relatively short chain length homopolymers and copolymers, including block and graft copolymers, and further relates to new initiators which find particular application in the improved processes.

Polymers having relatively low molecular weight (short chain lengths), which are often referred to as oligomers, have recently become of increasing interest since such polymers have been found to be useful in a variety of products, such as for example, in the production of surface coatings, such as high solids or solvent-free surface coatings, in adhesives, as plasticizers in polymeric compositions, and as reactive intermediates for the production of a wide variety of other materials such as for example surface active agents. While various alkyds, polyesters, polyethers, polyamides and polyurethanes having molecular weights in the range 500 to 2500 can be conveniently prepared in general by step growth polymerization, it has not been possible to produce similarly sized polymers satisfactorily by free radical polymerization. Indeed British Patent No. 1,431,446 to Rohm and Haas Corporation of USA teaches that:
"Attempts have been made to prepare acrylic polymers having molecular weight distributions in the range of 500 to 5000 by free radical polymerization techniques. However these procedures have generally been unsatisfactory either because of the high temperatures or high pressures needed to carry out the polymerization reaction or because of chain transfer agents employed in the reaction have objectionable odours or toxicity or because the properties of the polymer produced in the polymerization reaction have been adversely affected by a high incidence of initiator or chain transfer fragments on the polymer chains.
Furthermore, it is difficult to control the molecular weight distribution of polymers prepared by free radical techniques. Thus such polymers tend to have a broad molecular weight distribution, and tend to contain significant amounts of high and very low molecular weight polymer, which can give unattractive properties to the polymer compositions."

As stated above the preparation of some oligomers from unsaturated monomers has been limited by the technology available for free radical polymerization and until the discovery of the present invention it was difficult to obtain polymers with chain lengths below 200 monomer units by free radical polymerization.

Although techniques such as anionic or cationic polymerization in some circumstances can produce satisfactory oligomers from unsaturated monomers, the stringent reaction conditions required by these techniques are difficult to attain on an industrial scale, and in addition many monomers cannot be polymerized by these techniques.

Anionic, cationic and step-growth polymerizations are much more amenable to controlled growth since the reactions proceed one step at a time and can be stopped after a few steps if desired. Therefore, it would be desirable if the control achieved by step-growth polymerization techniques could also be achieved by free radical polymerization, but without the disadvantages of the stringent reaction conditions.

In the past the synthesis of block copolymers has been practically possible only by anionic polymerization although they could for a very limited number of monomers be made using cationic polymerization. The use of sequential addition of monomers in a conventional free radical polymerization leads to a mixture of homopolymers since there would be no living radicals at the end of each monomer addition step and new radicals would need to be produced to start the new monomer polymerizing. There are other methods known as transformation reactions that have been used to produce block copolymers of the AAAABBBB type. One of these is anionic polymerization of one monomer followed by reaction with bromine to give a bromo terminated polymer which is in turn reacted with silver perchlorate in the presence of the second monomer. This method is cumbersome and of limited applicability. Another method is anionic polymerization of one monomer followed by conversion of the anionic centre to a free radical by reaction with trimethyl lead chloride and heating this produces a block copolymer contaminated with homopolymer of the second monomer. Other transformation reactions are radical polymerization followed by cationic polymerization, or radical polymerization followed by anionic polymerization. All these methods suffer from the disadvantages mentioned above.

A further development of block copolymers are graft copolymers which are polymeric materials consisting of a backbone polymer chain to which are attached a plurality of polymer chains, with the attached or grafted polymer being chemically different from the backbone polymer chain. By way of illustration a graft copolymer of two monomers A and B could have the following chemical structure:-
Each of the backbones and grafted chains themselves may be copolymers of different monomers such as for example block copolymers. In addition either backbone or grafted chains may be branched.

Because of their structure graft copolymers have unique properties, in particular the chemical coupling of unlike polymeric entities makes graft copolymers useful for their surface active properties particularly in stabilizing physical blends of other wise incompatible polymers or monomeric compounds. They are of considerable industrial interest.

The usual method of formation of graft polymers involves first forming the polymer backbone or utilizing a naturally occurring polymer as a backbone and then creating an active polymerization initiating site at various places on the backbone polymer and utilizing this site to polymerize the necessary monomer(s) to form the graft chain. To form the graft chain the addition polymerization of vinyl monomers by free radical or cationic means, step growth polymerization, or ring opening polymerization of cyclic monomers may be utilized.

A common method of producing graft copolymers by free radical polymerization of the grafted chain is by generating radical sites on the polymer backbone in the presence of the monomer to be grafted. The radical sites can be generated by hydrogen atom abstraction from the polymers by a free radical, by irradiating with ultraviolet or ionizing radication or by use of a redox system, e.g. Fe⁺⁺/H₂O₂, when the backbone polymer contains suitable functional groups, e.g. hydroxyl. This general procedure usually gives rise to homopolymer as well as the desired graft copolymer. Using this method it is difficult to control the length of the grafted chains since the chains once initiated grow very rapidly until terminated by reaction with another radical.

An alternative method of the prior art is to produce reactive monomeric units into a polymer chain by copolymerization methods or by chemically treating the backbone polymer. Acrylic polymers and copolymers, for example, may be treated with phosphorous pentachloride perester. The latter, upon decomposition, gives free-radical sites for grafting.

The direct peroxidation of the backbone polymer with peroxides and hydroperoxides can sometimes be employed, but attempts to introduce active groups directly into polystyrene by reacting with benzoyl peroxide have not been successful. If a comonomer containing isopropyl groups is introduced into the polystyrene chain, direct peroxidation can be achieved.

US-A-3163677 discloses N,N,O-trisubstituted hydroxylamines including N,N,O,tri-tertiarybutyl hydroxylamine, and the use of the nitroxide radical formed therefrom as, inter alia, polymerization inhibitors. The propagation of a polymer chain is stopped when the terminal free radical reacts with a nitroxide radical derived from the hydroxylamine. The nitroxide radical acts as a radical trap and is useful, for instance, to stabilise ethylenically unsaturated monomer-containing liquids, such as styrene against polymerisation.

It has been discovered that it is now possible to produce oligomeric and normal short chain length homo- or copolymers by means of controlled-growth free radical polymerization by processes in accordance with the present invention and by processes initiated by compounds in accordance with the present invention.

According to one aspect of the present invention there is provided a method for the production of a polymer or a copolymer, particularly an oligomer, by free radical polymerization of a suitable unsaturated monomer, comprising heating with the monomer an initiator compound having the general structure of formula I 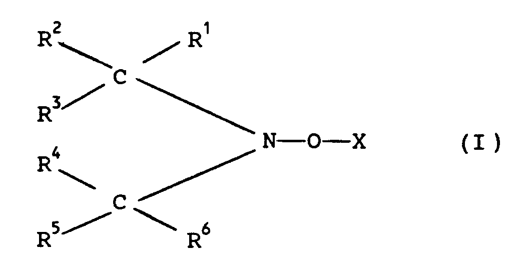
wherein X is a group comprising at least one carbon atom and is such that the free radical X^{.} is capable of polymerising the unsaturated monomer by conventional free radical polymerisation, and the radical functionality resides on the or one of the carbon atoms, and the groups R¹, R², R⁵ and R⁶ are the same or different straight chain or branched substituted or unsubstituted alkyl groups of a chain length sufficient to provide steric hindrance and weakening of the O-X bond,
and R³ and R⁴ are the same or different straight chain or branched alkyl or substituted alkyl groups or R³CNCR⁴ may be part of a cyclic structure which may have fused with it another saturated or aromatic ring, the cyclic structure or aromatic ring being optionally substituted;
such heating to be sufficient to cause scission of the O-X bond to form two free radicals: X^{.} being capable of initiating polymerisation; and the nitroxide radical of formula II 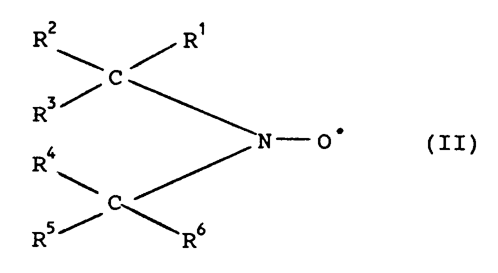
which does not initiate any substantial free radical polymerisation of the unsaturated monomer but which acts as a reversible terminator
According to a further aspect of the present invention there is provided an initiator suitable for use in processes for the production of polymers, particularly oligomers, by free radical polymerisation of a suitable unsaturated monomer, said initiator having the general structure of formula Ia 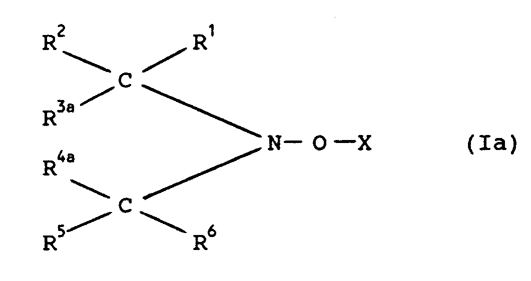
wherein X, R¹, R², R⁵ and R⁶ are as defined in connection with the compound of formula I above, and R^{3a}CNCR^{4a} is part of a cyclic structure which may have fused with it another saturated or aromatic ring, the cyclic structure or aromatic ring being optionally substituted.

Another aspect of the present invention is directed to polymers, particularly short chain oligomers, prepared by the processes of the present invention.

According to a further aspect of the present invention there is provided a block copolymer made by the polymerisation process of the present invention by alternately adding two or more monomers in order to produce a polymer with sequences of each monomer joined together. Another aspect of the present invention is directed to the production of graft copolymers by the processes of the present invention and to graft copolymers so produced.

Preferably, scission of the O-X bond is achieved at moderate temperatures, e.g., less than 200^{o}C, preferably less than 150^{o}C and more preferably less than 100^{o}C.

Suitable groups for X are tertiary butyl, cyanoisopropyl, phenyl, methyl or the like. In one embodiment the structure of X^{.} will be of the form 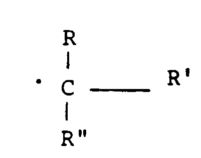
wherein R, R' and R'', are the same or different and may be selected from hydrogen, alkyl, phenyl, cyano, carboxylic acid, or carbocyclic groups including substituted groups thereof.

Suitable groups for R¹, R², R⁵, and R⁶ are methyl, ethyl, propyl, butyl, isopropyl, isobutyl, t-butyl, neo-pentyl, benzyl or the like.

Suitable groups for R³ and/or R⁴ are methyl, ethyl, propyl, butyl, isopropyl, isobutyl, t-butyl, pentyl, octadecyl or the like, or if R³CNCR⁴ is part of a cyclic structure this cyclic structure may be 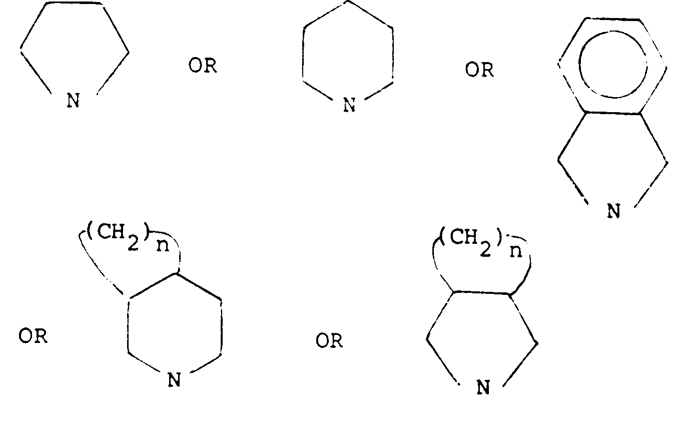
wherein n is an integer from 1 to 10. The cyclic structure may be substituted and n is preferably 1 to 6 including such cyclic groups when substituted.

For controlled free radical polymerisation by the initiators of Formula I the nitroxide radical of Formula II does not initiate any substantial free radical polymerisation of the unsaturated monomers itself.

While alkoxy amines of which the compounds of Formula I form a sub-group, are well known compounds, the compounds in accordance with Formula I are considered to be novel by virtue of the nature of their substituents.

It has been discovered that hindered alkoxy amines generally in accordance with the present invention can be used as initiators of free radical polymerization at convenient temperatures. Further, it has been discovered that such polymerization processes proceed by insertion of monomer units between the nitroxide radical of Formula II and X^{.}
e.g. 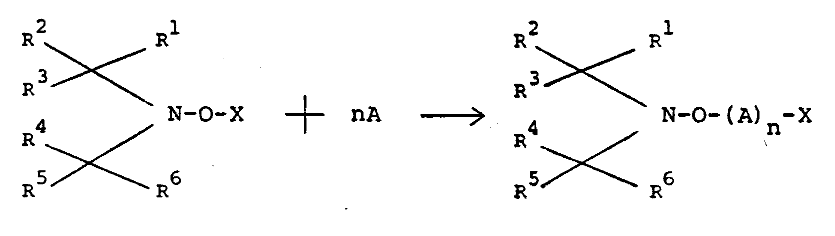
by a reversible termination process. This process is called controlled-growth free radical polymerization in the present specification.

Alkoxy amines such as those of Formula I can be manufactured by heating a nitroxide radical of Formula II in the presence of a stoichiometric amount of a carbon centred free radical X^{.}, where X^{.} may be generated by any of the methods well known in the art e.g. by the decomposition of an azo compound, by cission of an alkoxy radical or by H atom abstraction from a suitable monomeric or polymeric compound or by addition of a free radical to an olefin. More specifically X^{.} can be generated by the thermal or photochemical dissociation of X-X, or X-Z-X or X-Z-Z-X where Z is a group which in its uncombined form is a small stable molecule e.g. CO₂ or NH₂.

The alkoxyamine so formed may be isolated and purified for later use or it may be used without further purification for the initiation of polymerization.

The nitroxides of Formula II may be readily prepared by the oxidation of the appropriate secondary amine or hydroxylamine, reduction of the appropriate nitro or nitroso compound, or by the addition of free radicals to nitrones. Alternatively the alkoxyamine initiators can either by prepared or generated in situ by the addition of a source of free radicals to a suitable nitroxide either in the presence of an unsaturated monomer or with the monomer being added after the free radicals have reacted with the nitroxide. The free radicals can be generated by any of the methods well known in the art, e.g. by the decomposition of an azo compound, by cission of an alkoxy radical or by H atom abstraction from a suitable monomeric or polymeric compound, or by addition of a free radical to an olefin.

Preferably in the method of the present invention, the heating of the compounds of Formula I and the monomer is performed in a non polymerizable medium such as for example benzene, toluene, ethyl acetate.

The method of this aspect of the present invention is particularly suitable for the production of oligomeric polymers and copolymers including block and graft copolymers, and of course includes the reaction of two or more different monomers.

It is thus possible to control the polymerization processes of the present invention by selecting alkoxyamines of Formula I with appropriate substituents, selecting the polymerization temperature, and the amount and type of monomer(s) added at any one time.
Additional nitroxide radical of Formula II may be added if desired, such as for example to stabilize growing polymer chain. Although this controlled growth radical polymerization will proceed until the monomer present is consumed and then stop, the polymeric free radical is in effect "living" and polymerization will continue if further amounts of a polymerizable monomer are added. This additional monomer may not necessarily be the same as the previous monomer hence this controlled growth free radical polymerization has some advantages such as for example the flexibility and ability to produce polymers of controlled chain length and to produce block and graft copolymers. Further, the present method is applicable to a wide range of monomers. Additionally, it is now possible to readily prepare short chain oligomeric polymers from unsaturated monomers because the polymer chain length in any one polymerization step can be controlled by the relative amounts of monomer and initiator present in the reaction.

In one form of the polymers prepared by the processes of the present invention the polymers are oligomers which have functional groups capable of undergoing further chemical reactions to form useful materials. The polymers (which may be graft or block copolymers) produced by methods of the present invention will have at least one oxyamine group such as that shown as Formula II which is preferably a terminal oxyamine group on one end of the chain and an initiator residue (X) on the other end and depending upon the monomers used may have chemically reactive functional groups along the chain. Thus the products of this method will have at least one functional group per molecule. For technical, economic or other reasons it may be necessary or desirable to remove the oxyamine end group; which may be accomplished in ways that give a stable functional group at the end of the polymer chain for instance to form a terminal hydroxy group or terminal hydrogen atom. For example, reduction by well known methods e.g. Zn/CH₃OOH gives a hydroxy terminated polymer and a free amine terminated polymer may be reacted with hydrogen donors, e.g. thiols to give a hydrogen terminated polymer and hydroxylamine which can be reoxidised to the nitroxide, and with another free radical to give a range of terminal groups. In one preferred process a terminal oxyamine group is reacted so that the oxyamine group and a neighbouring group dissociate to form an unsaturated terminal group. If the last monomer unit is methyl methacrylate the oxyamine can decompose to form the unsaturated terminal group 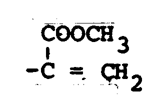
and a hydroxylamine; these oligomeric polymers with terminal unsaturation have been named macromers. Macromers are capable of further polymerization or copolymerisation via the unsaturated group to give a polymer with pendent chains.

The alkoxyamines may have other functional groups which can be used for further reactions of the oligomers if the Nitroxide end group can be kept as part of the polymer molecule. Alternatively the group X derived from the initial free radical initiator may contain functional groups.

A mixture of monomers can be added in the polymerization step to produce a random copolymer similar to that produced by normal free radical polymerization except with controlled chain length.

In contrast to the problems associated with prior art processes for producing block copolymers the method of the present invention produces block copolymers clearly with as many changes of monomer as desired and offers the possibility of producing block copolymers with short sequences of monomers. These would be a new class of materials with properties different from any other copolymer of the monomers concerned.

If necessary the block copolymers can be provided with reactive functional groups as described above.

In one embodiment of the processes of the present invention there is provided a two stage method for preparing a graft copolymer comprising firstly forming in a first stage reaction a polymer with pendent alkoxyamine groups of the general structure of Formula I having the group X attached to or part of the backbone polymer chains, and adding further monomer to the product of the first stage reaction followed by heating to form a graft copolymer by controlled growth free radical polymerization. The graft copolymer may be isolated in the ways well known in the art. The free radical polymerization preferably propagates in a step-wise fashion so that graft copolymer substantially free from any homopolymer is formed.
One method of making a polymer with alkoxyamine groups is by creating free radical sites on a preformed polymer in the presence of a nitroxide. This may be achieved by the methods described above or by reacting the polymer with a free radical which is capable of abstracting a hydrogen atom from the polymer in the presence of the nitroxide. Preferred free radicals for this are oxygen centered radicals such as hydroxy, t-butoxy and benzoyloxy. Optionally the product of this reaction may be isolated, for analysis and storage, or the next stage of the reaction may be carried out without isolation. In another embodiment of the processes of the present invention there is provided a method of making a polymer with alkoxyamine groups comprising copolymerizing two or more monomers wherein at least one of the monomers contains an alkoxyamine group so as to be capable of forming the polymer containing alkoxyamine groups of the general structure of Formula I.

The alkoxyamine can be any of those specified in Formula I. The grafted chairs can be formed by any of the polymerization processes described herein and may themselves by homopolymers, random copolymers or block copolymers.

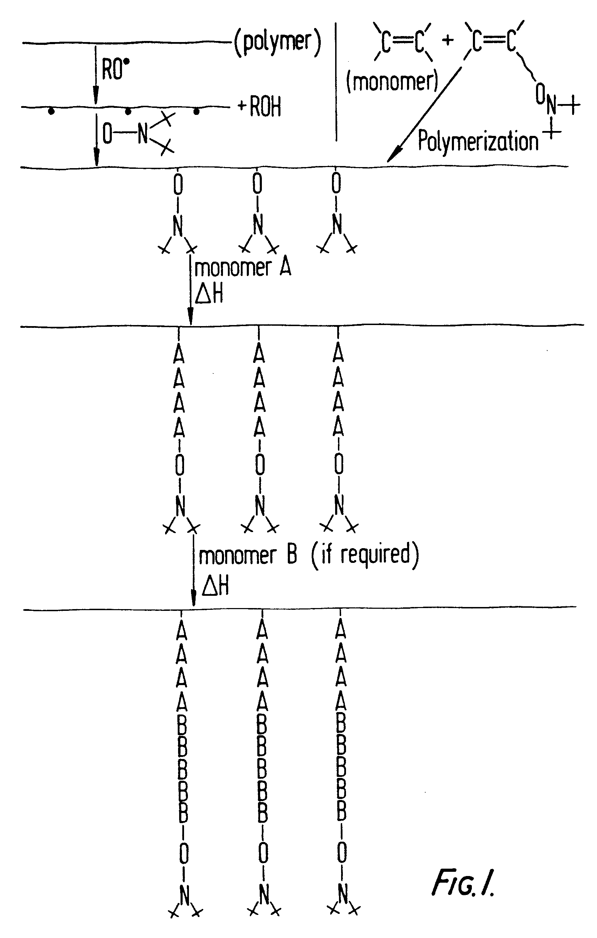

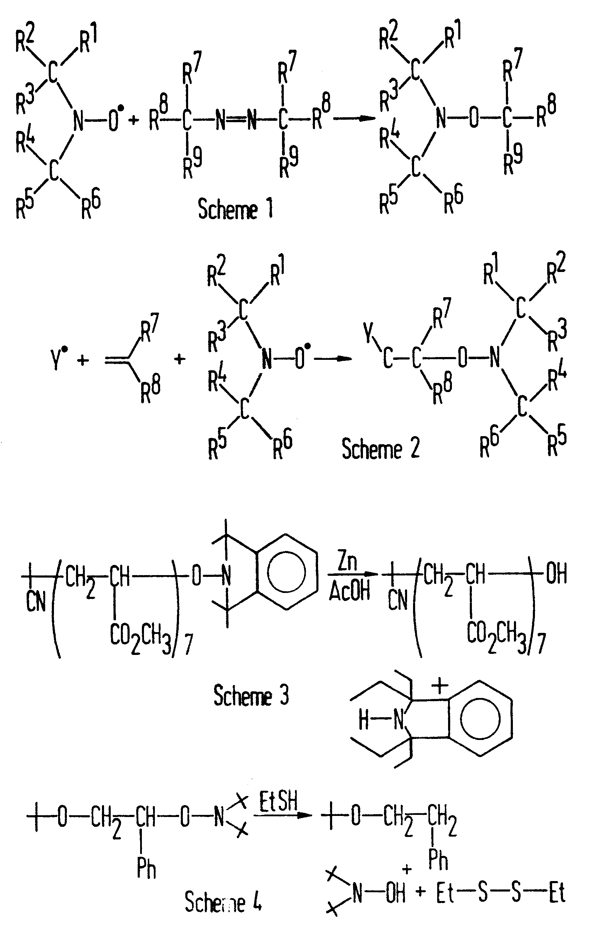

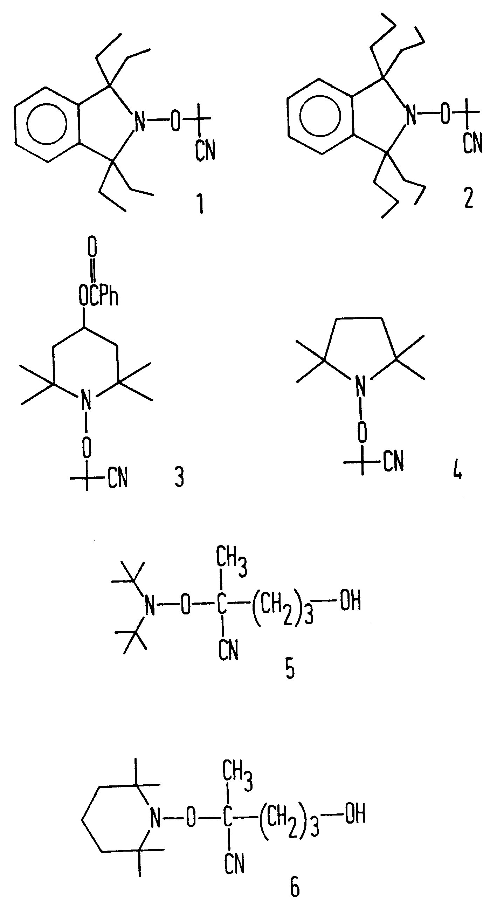

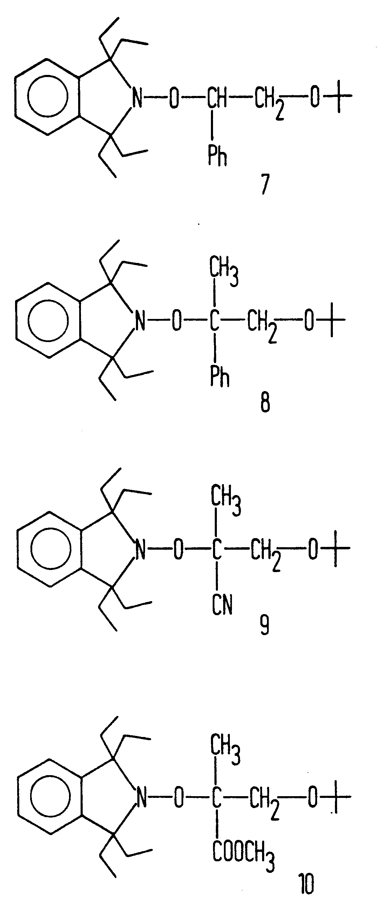

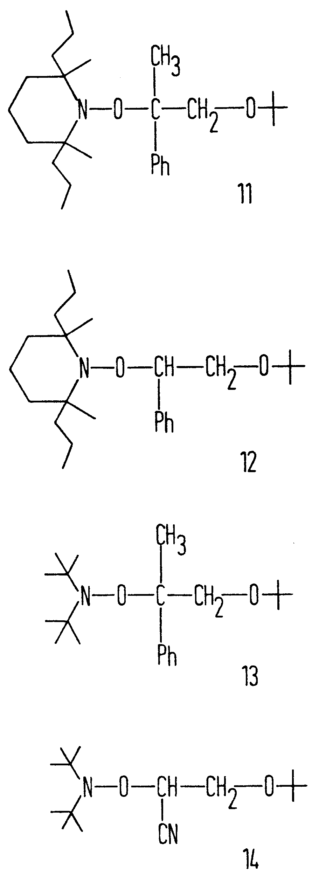

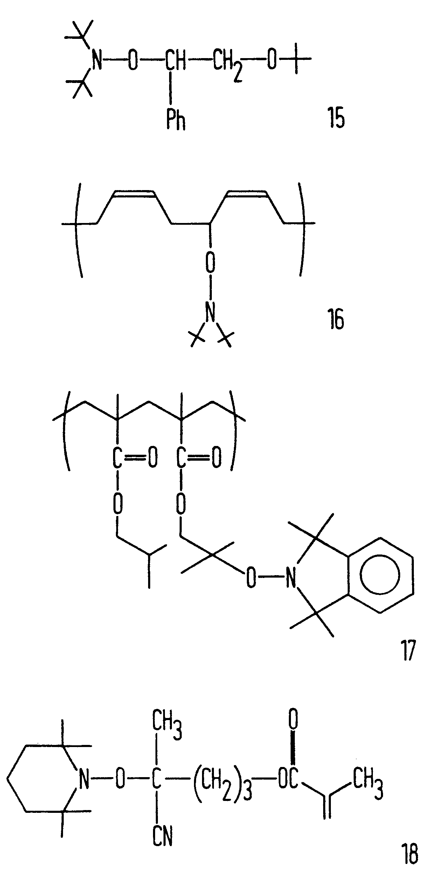

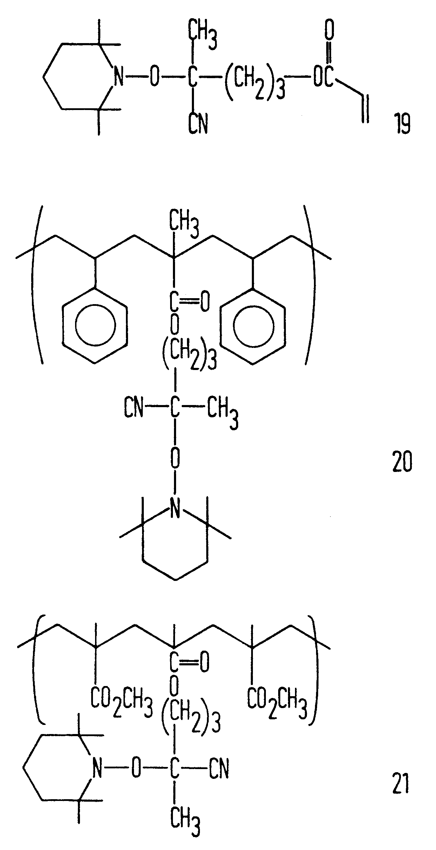

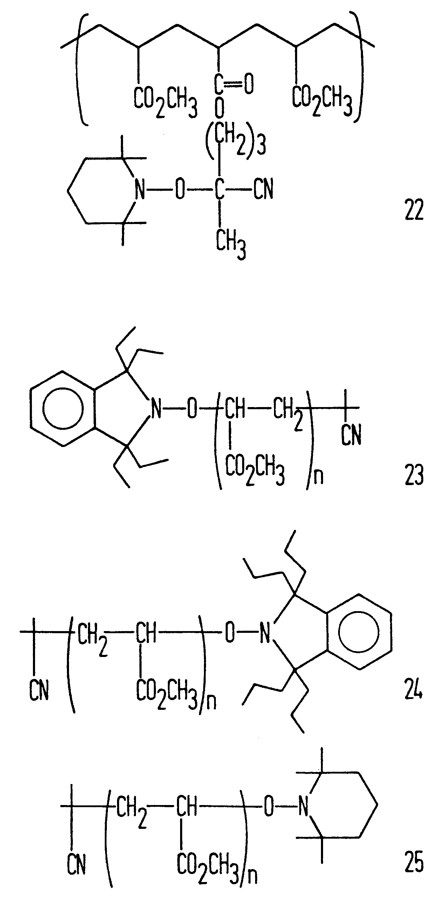

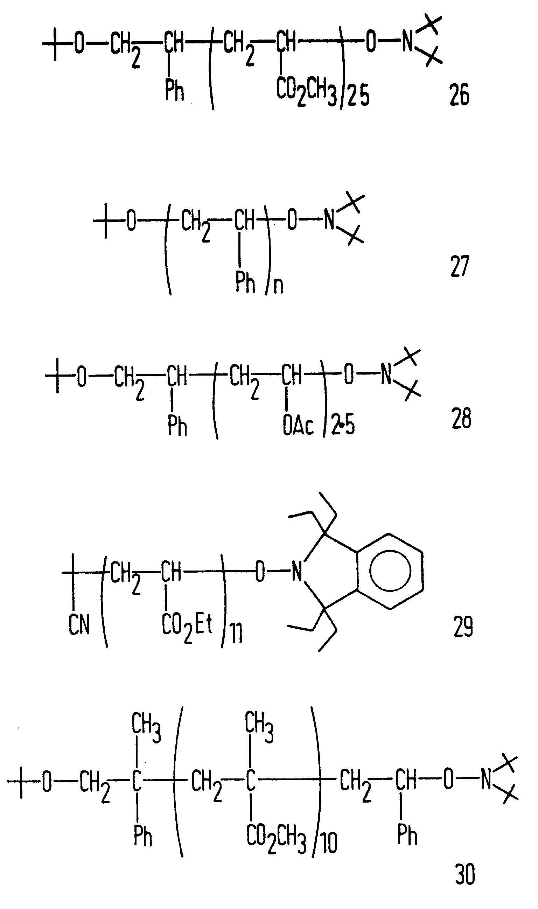

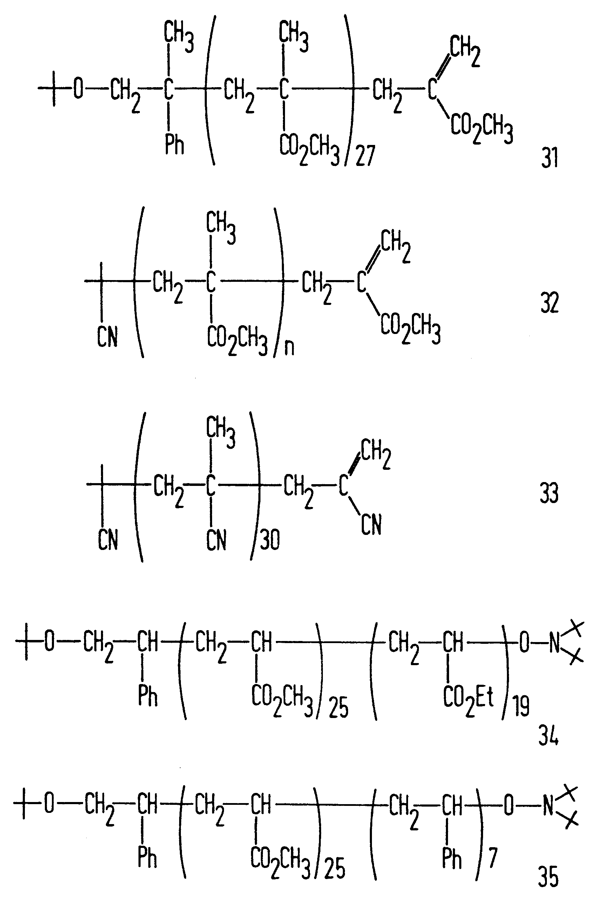

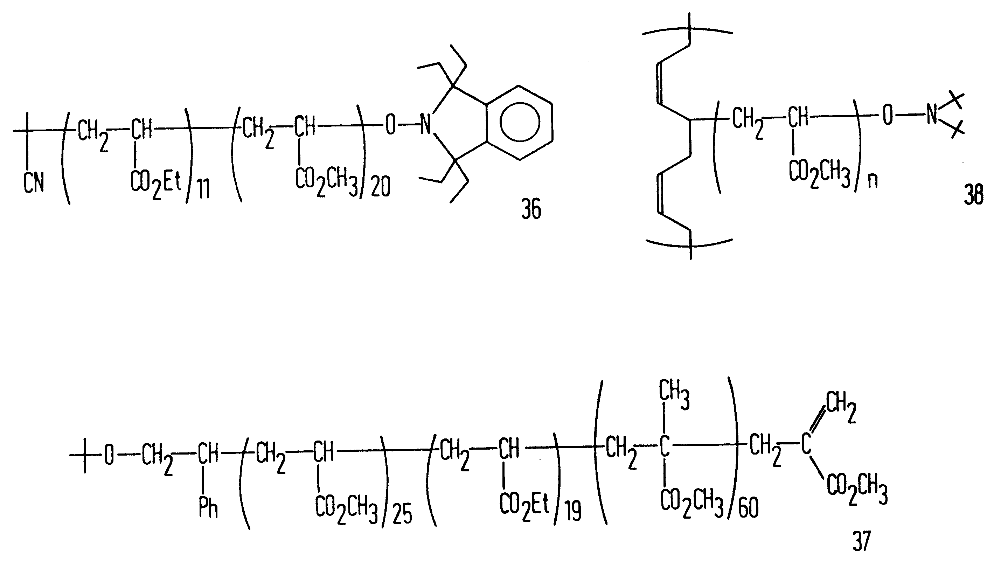

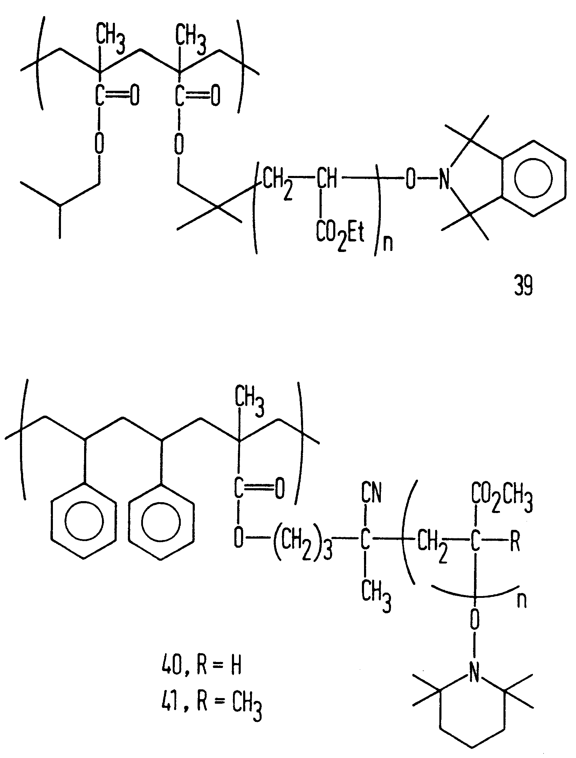

To assist in understanding this aspect of the invention the chemistry of the graft polymerization process of the present invention is illustrated in Figure 1.

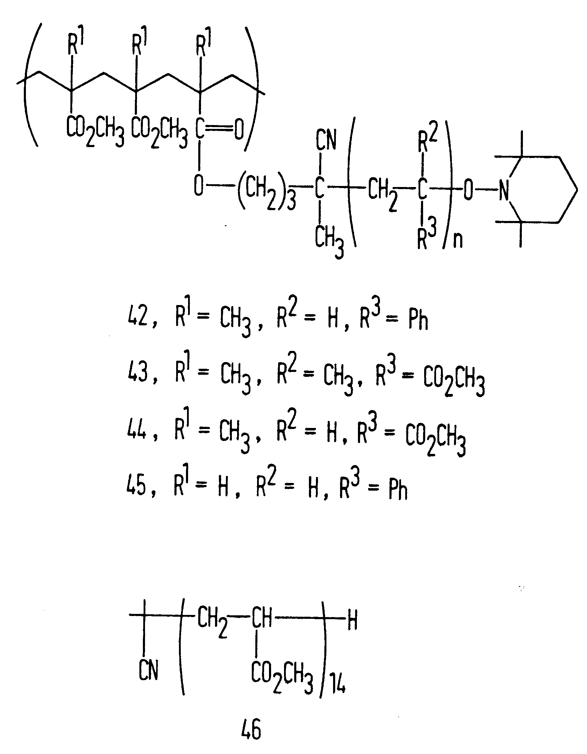

Figure 2 shows the reactions of the general types specifically illustrated by the examples for preparation of alkoxyamines and for their reaction.

The formulae on pages 3 to 13 of the drawings "structures 1 to 46" correspond to the structures of alkoxyamines and compounds produced from them as described in the following examples.

The invention will now be illustrated by the following non-limiting examples.

The preparation of salkoxyamines and of polymers were carried out on degassed solutions in evacuated and sealed vessels. Degassing was performed by 3 successive freeze/thaw cycles at 10⁻³ torr. ¹H NMR spectra were recorded on a Varian EM390 or a Bruker WM250 spectrometer with deuterochloroform as solvent (unless otherwise stated) and tetramethylsilane as internal standard. HPLC was performed on a Du Pont 850 liquid chromatograph using Ultrasphere ODS or Zorbax ODS columns. GPC measurements were carried out on a Waters system using 5 microstyrogel columns with exclusion limits of 500-10⁶ Angstroms. Tetrahydrofuran was used as the eluent at a flow rate of 1.02 ml/min and the system was calibrated with polystyrene standards. Monomers and solvents were purified by standard techniques immediately before use.

The half-life of the alkoxyamines refers to the value obtained in dilute ethyl acetate solution (unless otherwise specified) and in the presence of a 10-20 fold excess of a nitroxide to scavenge the carbon-centered radicals (X^{.}) from the dissociation of the alkoxyamine. The nitroxide chosen as the scavenger was, of course, different from the one arising from the dissociation of the alkoxyamine under investigation. The disappearance of the alkoxyamine was followed by HPLC and an internal standard was used in each case.

### PREPARATION OF NITROXIDES

1,1,3,3-Tetraethylisoindolin-2-yloxyl (m.p. 54.5-55.5°C) was prepared following the published procedure for the synthesis of 1,1,3,3-tetramethylisoindolin-2-yloxyl. (Griffiths, Moad, Rizzardo and Solomon, Aust. J. Chem. 36, 397,(1983). Thus, N-benzylphthalimide was converted to 2-benzyl-1,1,3,3-tetraethylisoindoline by reaction with excess ethyl Grignard, the benzyl group was removed by hydrogenolysis with Pd/C and the resulting 1,1,3,3-tetraethylisoindoline was oxidized with hydrogen peroxide/sodium tungstate to the nitroxide.

1,1,3,3-Tetra-n-propylisoindolin-2-yloxyl was prepared as a yellow-orange oil, in a similar manner, employing n-propyl Grignard reagent in place of ethyl Grignard.

2,6-Dimethyl-2,6-di-n-propylpiperidin-1-yloxyl was prepared from 2,6-dimethyl-1-hydroxypiperidine following the general strategy of reaction of Grignard reagents with nitrones, developed For the synthesis of substituted pyrrolidin-1-yloxyls (J.F.W. Keana, "New Aspects of Nitroxide Chemistry", in "Spin labelling", L.J. Berliner ed., Academic Press, New York, N.Y., Vol. 2, 1979). Thus, 2,6-dimethyl-1-hydroxypiperidine was oxidized with mercuric oxide to give the nitrone. This was reacted with n-propylmagnesium iodide to give 2,6-dimethyl-1-hydroxy-2-propylpiperidine which was in turn oxidized with mercuric oxide and the product nitrone reacted with n-propylmagnesium iodide to give 2,6-dimethyl-2,6-dipropyl-1-hydroxypiperidine. This was oxidized with air in methanol containing a catalytic amount of cupric acetate to yield the nitroxide which was isolated as an orange oil by chromatography on silica gel.

### PREPARATION OF ALKOXYAMINES

### A. By Decomposition of an Azo Compound in the Presence of a Nitroxide (Scheme 1).

### Example 1.

### Preparation of 2-(1-Cyano-1-methylethoxy)-1,1,3,3-tetraethylisoindoline (1)

A degassed solution of azobisisobutyronitrile (328 mg) and 1,1,3,3-tetraethylisoindolin-2-yloxyl (500 mg) in benzene (15 ml) was heated at 70°C for 16 hrs. The solution was chromatographed on silica gel and the desired product eluted with benzene. Crystallization from methanol/water gave 2-(1-cyano-1-methylethoxy)-1,1,3,3-tetraethylisoindoline (560 mg), m.p. 63-64°; ¹H NMR δ (CDCl₃): 0.75 (6H, t, J=7Hz, 2xCH₂CH₃), 0.95 (6H, t, J=7Hz, 2xCH₂CH₃), 1.75 (6H, s, OC(CH₃)₂CN), 1.9-2.25 (8H, m, 4xCCH₂CH₃), 6.95-7.35 (4H, m, ArH).

Half life at 60° in (solvent): 38 min (light petroleum), 33 min (ethyl acetate), 22 min (acetonitrile), 20 min (dimethylformamide), 17 min (methanol), 16 min (methanol: water, 9:1), 15 min (methanol: acetic acid, 9:1).

### Example 2.

### 2-(1-Cyano-1-methylethoxy)-1,1,3,3-tetra-n-propylisoindoline (2)

A degassed solution of azobisisobutyronitrile (170 mg) and 1,1,3,3-tetra-n-propylisoindolin-2-yloxyl (400 mg) was heated at 60°C for 40 hr. Chromatography on silica gel using light petroleum/benzene (1:1) as the eluent gave the title compound as a solid (320 mg), m.p. 110-112° (dec) after recrystallization from light petroleum. ¹H NMR δ (CDCl₃): 0.85 (12H, broad t, 4xCH₂CH₂CH₃), 1.15-2.1 (16H, broad m, 4xCH₂CH₂CH₃), 1.7 (6H, s, OC(CH₃)₂CN), 6.95-7.35 (4H, m, ArH). Half life at 60° = 31 min.

### Example 3

### Preparation of 1-(1-Cyano-1-methylethoxy)-4-benzoyloxy-2,2,6,6-tetramethylpiperidine (3)

A degassed solution of azobisisobutyronitrile (200 mg) and 4-benzoyloxy-2,2,6,6-tetramethylpiperidin-1-yloxyl (550 mg) in benzene (10 ml) was heated at ∼72°C for 16 hr. The solution was concentrated and the obtained solid was crystallized from methanol to yield (230 mg) white prisms m.p. 127.5-129°C. ¹H NMR δ (CDCl₃): 1.3 (12H, s, (CH₃)₂CNC(CH₃)₂), 1.75 (6H, s, OC(CH₃)₂CN), 2.05 (4H, m, CH₂CHOCH₂), 5.3 (1H, m, CH₂CHOCH₂) 7.5 (3H, m, ArH), 8.05 (2H, m, ArH). Half-life at 60° = 130 min.

### Example 4

### Preparation of 1-(1-Cyano-1-methylethoxy)2,2,5,5-tetramethylpyrrolidine (4)

A degassed solution of azobisisobutyronitrile (200 mg) and 2,2,5,5-tetramethylpyrrolidin-1-yloxyl (300 mg) in benzene (10 ml) was heated at 67°C for 18 hr. The product was isolated by column chromatography (using silica gel and petroleum ether: benzene (1:1) as eluent) as an oil (170 mg). ¹H NMR δ (CDCl₃): 1.2 (6H, s, N-C(CH₃)₂), 1.3 (6H, s, NC(CH₃)₂), 1.65 (6H, s, OC(CH₃)₂CN), 1.7 (4H, s, CH₂CH₂). Half-life at 60°C = 280 mins.

### Example 5

### Preparation of 4-Cyano-4-(di-t-butylaminyloxy)-pentanol (5)

A degassed solution of 4,4'-azobis(4-cyanon-n-pentanol) (220 mg, 0.87 mmol) and di-t-butylnitroxide (250 mg, 1.74 mmol) in ethyl acetate (15 ml) was irradiated at 360 nm in a thermostated Rayonet apparatus at 20°C for 24 hr. Chromatography on silica gel using light petroleum/ethyl acetate (3:7) as eluent gave the title compound as a colourless oil (190 mg). ¹H NMR δ (CDCl₃): 1.2 (9H, s, C(CH₃)₃), 1.3 (9H, s, C(CH₃)₃), 1.65 (3H, s, CH₃), 1.9 (4H, m, CH₂CH₂), 3.7 (2H, broad t, OCH₂). Half-life at 40°C = 8.5 min.

### Example 6

### Preparation of 1-(1-Cyano-4-hydroxy-1-methylbutoxy)-2,2,6,6-tetramethylpiperidine (6)

A degasaed solution of 2,2,6,6-tetramethylpiperidin-1-yloxy (600 mg, 3.85 mmol) and 4,4'-azobis(4-cyano-n-pentanol) (500 mg, 1.98 mmol) in ethyl acetate (20 ml) was heated at 80°C for 2 hr.

Chromatography on silica gel using light petroleum/ethyl acetate (1:1) as eluent gave the desired product as a colourless oil (150 mg 28% yield). ¹H NMR δ (CDCl₃): 1.1 (9H, broad s, 3xCH₃), 1.3 (4H, s, 2xCH₂), 1.5 (5H, s), 1.7 (3H, s, CH₃), 1.9 (4H, m), 3.7 (2H, broad t, CH₂CH₂O). Mass spectrum CI (CH₄) m/e: 269 (MH⁺), 156, 140.

### B. By Addition of a Free Radical to an Olefin in the Presence of a Nitroxide (Scheme 2).

### Example 7

### Preparation of 2-(2-t-Butoxy-1-phenylethoxy)-1,1,3,3-tetraethylisoindoline (7)

A degassed solution of di-t-butylperoxyoxalate (95 mg) and 1,1,3,3-tetraethylisoindolin-2-yloxyl (230 mg) in styrene (5 ml) was heated at 50°C for 4 hr. The residue obtained after removal of volatiles at reduced pressure was dissolved in warm methanol and cooled in a refrigerator to give colourless needles of the title compound (245 mg), m.p. 85-86°. ¹H NMR δ (CDCl₃): 0.25 (4H, t, J=7Hz, CH₂CH₃), 0.8-1.15 (9H, m, 3xCH₂CH₃), 1.22 (9H, s, OC(CH₃)₃), 1.3-2.8 (8H, broad m, 4xCH₂CH₃), 3.4 (1H, dd, J=10, 4Hz, OCH₂CH), 3.75 (1H, dd, J=10, 4Hz, OCH₂CH), 4.75 (½H, d, J=4Hz, OCH₂CH), 4.85 (½H, d, J=4Hz, OCH₂CH), 6.85-7.5 (9H, m, ArH).

### Example 8

### 2-(2-t-Butoxy-1-methyl-1-phenylethoxy)-1,1,3,3-tetraethylisoindoline (8)

1,1,3,3-Tetraethylisoindolin-2-yloxyl (560 mg) and di-t-butylperoxyoxalate (240 mg) in α-methylstyrene (5 ml) gave the title compound (520 mg); m.p. 87.5-89° (dec) after recrystallization from methanol. ¹H NMR δ (CDCl₃): 0.4-1.05 (12H, m, 4xCH₂CH₃), 1.1 (9H, s, (CH₃)₃CO), 1.4-2.5 (8H, broad m, 4xCH₂CH₃), 1.75 (3H, s, CH₃CO), 3.4 (1H, d, J=9Hz, OCH₂), 3.6 (1H, d, J=9Hz, OCH₂), 6.8-7.6 (9H, m, ArH). Half life at 60° = 75 min.

### Example 9

### 2-(2-t-Butoxy-1-cyano-1-methylethoxy)-1,1,3,3-tetraethylisoindoline (9)

The title compound was prepared from 1,1,3,3-tetraethylisoindolin-2-yloxyl (280 mg) and di-t-butylperoxyoxalate (120 mg) in methacrylonitrile (5 ml). It was isolated as an oil (180 mg) by preparative reverse-phase HPLC using a C₁₈ column, and 95% acetonitrile/5% water as the eluent. Mass spectrum: MH⁺ calculated, 388.301. Found, 387.301. ¹H NMR δ (CDCl₃): 0.7 (6H, t, J=7Hz, 2xCH₂CH₃), 0.95 (6H, t, J=7Hz, 2xCH₂CH₃), 1.25 (9H, s, (CH₃)₃CO), 1.68 (3H, s, CH₃CCN), 2.0 (8H, m, 4xCH₂CH₃), 3.4 (1H, d, J=9Hz, OCH₂C), 3.75 (1H, d, J=9Hz, OCH₂C), 7.1 (4H, m, ArH). Half life at 60° = 55 min.

### Example 10

### 2-(2-t-Butoxy-1-methoxycarbonyl-1-methylethoxy)-1,1,3,3-tetraethylisoindoline (10)

The title compound was prepared as in Example 9 but replacing the methacrylonitrile with methyl methacrylate (5 ml). It was isolated as an oil (185 mg) by HPLC using a C₁₈ column and 84% ethanol/16% water as the eluent. Mass spectrum: MH⁺ calculated, 420.311. Found, 420.309. ¹H NMR δ (CDCl₃): 0.7 (6H, t, J=6Hz, 2xCH₂CH₃), 0.9 (6H, dt, J=8, 2Hz, 2xCH₂CH₃), 1.22 (9H, s, OC(CH₃)₃), 1.62 (3H, s, CH₂CCH₃), 1.4-2.4 (8H, m, 4xCH₂CH₃), 3.45 (1H, d, J=9Hz, OCH₂C), 3.72 (1H, d, J=9Hz, OCH₂C), 3.8 (3H, s, OCH₃), 7.2 (5H, m, ArH). Half life at 60° = 123 min.

### Example 11

### 1-(2-t-Butoxy-1-methyl-1-phenylethoxy)-2,6-dimethyl-2,6-di-n-propylpiperidine (11)

A degassed solution of 2,6-dimethyl-2,6-di-n-propylpiperidin-1-yloxyl (80 mg) and di-t-butylperoxyoxalate (40 mg) in α-methylstyrene (2 ml) was heated at 50°C for 1.25 hr. Evaporation of the volatiles followed by chromatography of the residue on silica gel gave the title compound (50 mg) as an oil (eluted with light petroleum/benzene 4:1). ¹H NMR δ (CDCl₃): 0.2-1.9 (26H, m), 1.08 (9H, s, OC(CH₃)₃), 1.8 (3H, s, PhCCH₃), 3.35 (1H, d, J=9Hz, OCH₂C), 3.68 (1H, d, J=9Hz, OCH₂C), 7.4 (5H, m, ArH). Half life at 60° = 10 min.

### Example 12

### 1-(2-t-Butoxy-1-phenylethoxy)-2,6-dimethyl-2,6-di-n-propylpiperidine (12)

The title compound was prepared as for Example 11 but replacing α-methylstyrene with styrene (2 ml) and isolated as an oil in the same way. ¹H NMR δ (CDCl₃): 0.2-1.8 (26H, m), 1.0 (9H, s, OC(CH₃)₂), 3.28 (1H, m, OCH₂CH), 3.78 (1H, m, OCH₂CH), 7.3 (5H, broad s, ArH). Half life at 80° = 400 min.

### Example 13

### N-(2-t-Butoxy-1-methyl-1-phenylethoxy)-N,N-di-t-butylamine (13)

A degassed solution of di-t-butylnitroxide (200 mg) and di-t-butylperoxyoxalate (80 mg) in α-methylstyrene (5 ml) was heated at 45°C for 1 hr. Evaporation of the volatiles and chromatography of the residue on silica gel with light petroleum/benzene 4:1, gave the title compound as an oil (230 mg). ¹H NMR δ (CDCl₃): 0.95 (9H, s, NC(CH₃)₃), 1.05 (9H, s, NC(CH₃)₃), 1.3 (9H, s, OC(CH₃)₃), 1.75 (3H, s, CH₂CCH₃), 3.4 (1H, d, J=8Hz, OCH₂), 3.7 (1H, d, J=8Hz, OCH₂), 7.4 (5H, m, ArH). Half life at 40° = 18 min.

### Example 14

### N-(2-t-Butoxy-1-cyanoethoxy)-N,N-di-t-butylamine (14)

The title compound was prepared as for Example 13 but replacing α-methylstyrene with acrylonitrile (5 ml). It was isolated as an oil (180 mg) by preparative HPLC using a C₁₈ column and 80% acetonitrile/20% water as the eluent. ¹H NMR δ (CDCl₃): 1.19 (9H, s, OC(CH₃)₃), 1.24 (9H, s, NC(CH₃)₃), 1.27 (9H, s, NC(CH₃)₃), 3.6 (2H, d, J=7Hz, OCH₂CH), 4.7 (1H, t, J=7Hz, OCH₂CH). Half life at 90° = 105 min.

### Example 15

### N-(2-t-Butoxy-1-phenylethoxy)-N,N-di-t-butylamine (15)

A degassed solution of di-t-butylnitroxide (400 mg) and di-t-butylperoxyoxalate (234 mg) in styrene (5 ml) was heated at 50°C for 2 hr. The title compound was isolated as an oil (530 mg) (which solidified on keeping) by chromatography on silica gel using light petroleum/benzene 1:1 as the eluent. ¹H NMR δ (CDCl₃): 0.8-1.6 (18H, broad m, 2xNC(CH₃)₃), 1.08 (9H, s, OC(CH₃)₃), 3.52 (1H, dd, J=11, 7Hz, OCH₂CH), 3.95 (1H, dd, J=11, 5Hz, OCH₂CH), 4.84 (½H, d, J=6Hz, OCH₂CH), 4.9 (½H, d, J=6Hz, OCH₂CH), 7.25 (5H, m, ArH). Half life at 80°C = 70 min; at 90° = 22 min.

### C. Preparation of Polymer-Derived Alkoxyamines by Hydrogen Abstraction from Polymers in the Presence of a Nitroxide

### Example 16

### Grafting of Di-t-butylnitroxide onto cis-Polybutadiene (Product 16)

A degassed solution of freshly purified cis-polybutadiene (0.5 g, M̅ₙ=400,000), di-t-butylperoxyoxalate (58 mg) and di-t-butylnitroxide (120 mg) in tetrachloroethylene (10 ml) was heated et 50°C for 2 hr. The reaction mixture was added slowly to acetone (75 ml) with stirring to give the polybutadiene containing grafted nitroxide (0.55 g). The signal in the ¹H NMR at δ 1.2 confirmed the presence of grafted nitroxide in the ratio of 1 nitroxide per 27 butadiene units. Further precipitation into acetone did not alter the composition of the polymer.

### Example 17

### Grafting of 1,1,3,3-Tetramethylisoindolin-2-yloxyl onto Poly(isobutyl methacrylate) (Product 17)

A degassed solution of poly(isobutyl methacrylate) (0.5 g), 1,1,3,3-tetramethylisoindolin-2-yloxyl (210 mg) and di-t-butylperoxyoxalate (120 mg) in tetrachloroethylene (3 ml) was heated at 50°C for 3 hrs. The reaction mixture was added slowly to stirred methanol (25 ml) to give the poly(isobutyl methacrylate) containing grafted nitroxide (0.64 g). ¹H NMR signals at δ 1.3, 1.5 and 6.9-7.3 confirmed the presence of grafted nitroxide in the ratio of 1 nitroxide per 15 isobutyl methacrylate units. Further purification did not alter the composition of the polymer.

### D. Preparation of Olefin-Containing Alkoxyamines

### Example 18

### Preparation of 4-Cyano-4-(2,2,6,6-tetramethylpiperidin-1-oxy)pentyl methacrylate (18)

Methacryloyl chloride (174 mg, 1.7 mmol) in diethyl ether (5 ml) was slowly added to a cooled (0°C) solution Of 1-(1-cyano-4-hydroxy-1-methylbutoxy)-2,2,6,6-tetramethylpiperidine (Example 6) (150 mg, 0.56 mmol) in diethyl ether (10 ml) containing triethylamine (339 mg, 3.3 mmole). The reaction was stirred at ambient temperature for 1 hr after which was added triethylamine (2 ml) and water (10 ml) and stirred for a further hour. The layers were separated and the ether layer washed with saturated bicarbonate, water, brine, dried over magnesium sulphate and concentrated. Chromatography using silica gel and dichloromethane as eluent gave the title compound as a colourless oil (132 mg, 70% yield). ¹H NMR δ (CDCl₃): 1.1 (9H, s), 1.3 (4H, s), 1.5 (5H, broad s), 1.95 (7H, m), 4.2 (2H, m, OCH₂), 5.5 (1H, m, olefinic CH₂), 6.1 (1H, broad s, olefinic CH₂). Mass spectrum CI (CH₄) m/e: 337 (MH⁺), 156, 140.

### Example 19

### Preparation of 4-Cyano-4-(2,2,6,6-tetramethylpiperidin-1-oxy)pentyl acrylate (19)

Acryloyl chloride (540 mg, 5.97 mmol) in diethyl ether (15 ml) was slowly added to a cooled solution of 1-(1-cyano-4-hydroxy-1-methylbutoxy)-2,2,6,6-tetramethylpiperidine (533 mg, 1.98 mmol) (Example 6) in diethyl ether (20 ml) containing triethylamine (1.22 g, 12.4 mmol). After stirring at room temperature for 40 minutes triethylamine (5 ml) and water (5 ml) were added and stirred for 30 min. The ether layer was separated and washed with water, saturated bicarbonate solution, brine, dried over magnesium sulphate and concentrated. Chromatography using silica gel and dichloromethane as eluent gave the product as a colourless oil (416 mg, 65% yield). ¹H NMR δ (CDCl₃): 1.11 (6H, s), 1.15 (3H, s), 1.51 (6H, m), 1.67 (3H, s, CH-C-CH₃), 2.02 (4H, m), 4.23 (2H, m, CH₂-O), 5.68-6.54 (3H, m, olefinic H). Mass spectrum CI (CH₄) m/e: 323 (MH⁺), 156, 140.

### E. Preparation of Oligomeric Alkoxyamines by Copolymerization of Olefinic Alkoxyamines

### Example 20

### Copolymerization of 4-Cyano-4-(2,2,6,6-tetramethylpiperidin-1-oxy)pentyl methacrylate and Styrene (Product 20)

A degassed solution of the title alkoxyamine (500 mg, 1.49 mmol) and styrene (1.6 g, 15.4 mmol) in ethyl acetate (7 ml) containing di-t-butylperoxyoxalate (210 mg, 0.9 mmol) was heated at 35°C for 2 hr. The product was precipitated from methanol to give 870 mg of a white powder. GPC: M̅ₙ=3003, M̅_{w}/M̅ₙ=1.5. ¹H NMR δ (CDCl₃): 0.7-2.3 (aliphatic H), 3.2 (broad s, OCH₂), 6.3-7.4 (ArH).

From the integral values obtained from the ¹H NMR it was determined that 1 alkoxyamine per 8 styryl units was present in the copolymer. This implied that on the average 4 alkoxyamine moieties were incorporated per chain.

### Example 21

### Copolymerization of 4-Cyano-4-(2,2,6,6-tetramethyl-piperidin-1-oxy)pentyl methacrylate and Methyl Methacrylate (Product 21)

A degassed solution of the title alkoxyamine (500 mg, 1.49 mmol) and methyl methacrylate (1.5 g, 15.0 mmol) in ethyl acetate (15 ml) containing di-t-butylperoxyoxalate (200 mg, 0.85 mmol) was heated at 35°C for 20 hr. The product was precipitated from methanol as a white powder (1.3 g). GPC: M̅ₙ=4323, M̅_{w}/M̅ₙ=1.6. ¹H NMR δ (CDCl₃): 0.5-2.0 (aliphatic H) 3.4-3.9 (OCH₃).

From ¹H NMR integral data and the GPC determined molecular weight it was deduced that 6 alkoxyamine units were incorporated per chain (ratio of 1 alkoxyamine per 7 methyl methacrylate units).

### Example 22

### Copolymerization of 4-Cyano-4-(2,2,6,6-tetramethylpiperidin-1-oxy)pentyl acrylate and Methyl Acrylate (Product 22)

A degassed solution of the title alkoxyamine (100 mg, 0.31 mmol) and methyl acrylate (270 mg, 3.13 mmol) in ethyl acetate (5 ml) containing di-t-butylperoxyoxalate (20.1 mg) was heated at 35°C for 18 hr. The product was isolated by chromatography using silica gel and light petroleum/ethyl acetate (1:1) as eluent. This gave the product as a gum (132 mg). ¹H NMR δ (CDCl₃): 1.12-2.3 (aliphatic H), 3.66 (OCH₃), 4.10 (CH₂O). GPC: M̅ₙ= 3756, M̅_{w}/M̅ₙ=2.4.

From ¹H NMR integrals and GPC data it was concluded that approximately 4 alkoxyamine units were incorporated per chain (ratio of 1 alkoxyamine per 10 methyl acrylate moieties).

### PREPARATION OF HOMOPOLYMERS AND RANDOM COPOLYMERS

### Example 23

### Preparation of Methyl Acrylate Oligomers of Structure 23

A. (n=1). A degassed solution of 2-(1-cyano-1-methylethoxy)-1,1,3,3-tetraethylisoindoline (62 mg) and 1,1,3,3-tetraethylisoindolin-2-yloxyl (1 mg) in benzene (9 ml) and methyl acrylate (1 ml) was heated at 80°C for 16 hr. Removal of volatiles gave a colourless gum (90 mg) shown by NMR and HPLC to consist of the title compound n=1 with small amounts of n=2 and 3. The title compound (n=1) was isolated in pure form (65 mg, 82%) by chromatography on silica gel using benzene and benzene/ethyl acetate mixtures as eluent. ¹H NMR (90 MHz) δ: 0.4-1.1 (12H, m, 4xCH₂CH₃), 1.42 and 1.48 (6H, s, C(CH₃)₂CN), 1.5-2.4 (88, m, CH₂CH₃), 2.08 (2H, d, J=7Hz, CH₂CH-O), 2.80 (3H, s, COOCH₃), 4.60 (1H, t, J=7Hz, CH₂CH-O), 6.9-7.3 (4H, m, ArH).
B. (n=7). A degassed solution of 2-(1-cyano-1-methylethoxy)-1,1,3,3,-tetraethylisoindoline (62.5 mg) and 1,1,3,3-tetraethylisoindolin-2-yloxyl (0.5 mg) in methyl acrylate (10 ml) was heated at 80°C for 1.5 hr. A portion of this solution (5 ml) was withdrawn and used in Part C below. Removal of volatiles from the remaining portion (5 ml) gave a colourless gum (95 mg) shown by NMR to have the title structure, where n=7 on average, from measurement of peak intensities. ¹H NMR (90 MHz) δ: 0.3-1.2 (CH₃-CH₂), 1.35 and 1.40 (CN-C-(CH₃)₂), 1.2-3.0 (CH₂-CH), 3.7 (-OCH₃), 4.2-4.6 (NO-CH-COOCH₃), 6.8-7.4 (ArH).
C. (n=14). A portion (5 ml) of the reaction mixture from Part B was heated at 100°C for 4 hr. Removal of volatiles gave a colourless gum (165 mg) shown by NMR to consist of the title oligomer where n=14 on average. The ¹H NMR of this oligomer differed from that of Part B only in the peak intensities of the end groups.
D. (n=70). A degassed solution of the oligomer from Part B (80 mg) in methyl acrylate (5 ml) was heated at 120° for 1.5 hr. Removal of volatiles gave a colourless gum (0.57 g) which was shown by ¹H NMR to consist of the title oligomer where n∼70 on average. GPC: M̅ₙ=6700, M̅_{w}/M̅ₙ=1.82

### Example 24

### Preparation of Methyl Acrylate Oligomers of Structure 24

A. (n=11). A degassed solution of 2-(1-cyano-1-methylethoxy)-1,1,3,3-tetra-n-propylisoindoline and 1,1,3,3-tetra-n-propylisoindolin-2-yloxyl (0.25 mg) in methyl acrylate (5 ml) was heated at 80°C for 1 hr. A sample (approx. 1 ml) of the reaction mixture was withdrawn and shown to contain the title oligomer (n-11 on average) by ¹H NMR spectroscopy.
B. (n=16). The remaining reaction mixture from Part A was heated at 100°C for 2 hr at which time a sample (approx. 1 ml) was withdrawn and shown to contain the title oligomer (n=16 on average) by ¹H NMR spectroscopy.
C. (n=21). The remaining reaction mixture from Part B was heated at 100°C for a further 4 hr. Removal of volatiles gave a colourless gum (140 mg) shown by ¹H NMR to consist of the title oligomer where n=21 on average. ¹H NMR (90 MHz) δ: 0.7-1.0 (CH₂CH₂CH₃), 1.31 and 1.38 (C(CH₃)₂CN, singlets), 3.7 (COOCH₃), 4.1-4.6 (CH₂CH-O), 6.9-7.3 (ArH).

### Example 25

### Preparation of Methyl Acrylate Oligomers of Structure 25

A degassed solution of 1-(1-cyano-1-methylethoxy)-2,2,6,6-tetramethylpiperidine (45 mg) in methyl acrylate (5 ml) was heated at 100°C for 1 hr to give the title oligomer (n=4 on average). Continued heating at 120°C for 5 hr increased the chain length to n=8 on average. Further heating at 140°C for 2 hr increased the chain length to n=22 on average as determined by NMR spectroscopy. A portion of the reaction mixture (3 ml) was added to light petroleum (30 ml) to give colourless product (270 mg). ¹H NMR (90MHz) δ: 0.9-1.25 (N-C-CH₃), 1.31 and 1.38 (C(CH₃)₂CN), 3.7 (COOCH₃), 4.1-4.4 (CH-O-N).

### Example 26

### Preparation of Methyl Acrylate Oligomer of Structure 26

A degassed solution of N-(2-t-butoxy-1-phenylethoxy)-N,N-di-t-butylamine (52 mg) in methyl acrylate (3 ml) was heated at 100°C for 0.5 hr. Removal of volatiles gave a colourless gum (0.42 g) shown to have the structure of the title oligomer, in which n=25 on average, by NMR. GPC: M̅ₙ=2500, M̅_{w}/M̅ₙ=1.7. ¹H NMR (250MHz) δ: 1.10 and 1.11 (sharp signals, O-t-butyl), 1.15 and 1.23 (broadened singlets, N-t-butyls), 3.68 (COOCH₃), 7.1-7.35 (ArH).

### Example 27

### Preparation of Styrene Oligomers of Structure 27

A. (n=4.5). A degassed solution of N-(2-t-butoxy-1-phenylethoxy)-N,N-di-t-butylamine (30 mg) and di-t-butylnitroxide (0.5 mg) in styrene (3 ml) was heated at 100°C for 1 hr. Removal of volatiles gave a colourless gum (73 mg) shown by NMR to consist of the title oligomer where n=4.5 on average.
B. (n=12). The product from Part A and di-t-butylnitroxide (0.5 mg) were dissolved in styrene (5 ml), degassed and heated at 100°C for a further 1 hr. Removal of volatiles gave the title oligomer (160 mg) in which n=12 on average. ¹H NMR (90MHz) δ: 0.7-1.3 (O-t-butyl and N-t-butyls), 3.1-3.4 (CH₂-O), 3.9-4.2 (CH-ON), 6.3-7.5 (ArH).

### Example 28

### Preparation of Vinyl Acetate Oligomer of Structure 28

A degassed solution of N-(2-t-butoxy-1-phenylethoxy)-N,N-di-t-butylamine (32 mg) in anhydrous vinyl acetate (3 ml) was heated at 120°C for 1 hr. Removal of volatiles gave a colourless gum (55 mg) shown by NMR to consist of the title oligomer in which n=2.5 on average. ¹H NMR (90MHz) δ: 0.7-1.4 (O-t-butyl and N-t-butyls), 1.7-2.1 (CH₂ and CH₃COO), 3.2-3.5 (CH₂O), 4.6-5.1 (CH-OAc), 6.1-6.3 (O-CH-O), 7.2 (ArH).

### Example 29

### Preparation of Ethyl Acrylate Oligomer of Structure 29

A degassed solution of 2-(1-cyano-1-methylethoxy)-1,1,3,3-tetraethylisoindoline (63 mg) and 1,1,3,3-tetraethylisoindolin-2-yloxyl (0.5 mg) in ethyl acrylate (10 ml) was heated at 80°C for 2 hr followed by 120°C for 0.5 hr. Evaporation of volatiles gave the title oligomer (290 mg) (n=11 on average). ¹H NMR (90MHz) δ: 0.4-1.1 (C-CH₂CH₃), 1.1-1.4 (COOCH₂CH₃ and C-CH₃), 1.4-2.5 (CH₂-CH), 4.1 (COOCH₂CH₃) 6.9-7.3 (ArH).

### Example 30

### Co-Oligomerization of Styrene and Methyl Acrylate

A degassed solution of N-(2-t-butoxy-1-phenylethoxy)-N,N-di-t-butylamine (31 mg) and di-t-butylnitroxide (0.5 mg) in styrene (3 ml) and methyl acrylate (3 ml) was heated at 100°C for 1 hr. The ¹H NMR (90MHz) spectrum of the product (140 mg) obtained on evaporation of the volatiles showed it to be a random co-oligomer containing an average of 5.5 styrene units (Ar, δ 6.4-7.4) and 4.3 methyl acrylate units (COOCH₃, δ 3.1-3.7) per chain terminated by the di-t-butylaminoxy group (CH₃, δ 0.8-1.3). The penultimate groups consisted of both styryl (Ph-CH-ON, δ 3.9-4.2) and acrylate (CH₃OOC-CH-ON, δ 4.3-4.7) units,

### Example 31

### Preparation of Methyl Methacrylate Oligomer of Structure 30

A degassed solution of N-(2-t-butoxy-1-methyl-1-phenylethoxy)-N,N-di-t-butylamine (30 mg) in methyl methacrylate (10 ml) and styrene (0.5 ml) was heated at 60°C for 0.75 hr. Removal of volatiles gave a colourless gum (105 mg) the ¹H NMR of which is consistent with the structure of the title oligomer (n=10) contaminated with approx. 20% of oligomer possessing an olefinic end group. In this case termination of the propagating poly(methyl methacrylate) radical can take place either by disproportionation with nitroxide to give an olefinic end group (see Examples 33 and 34) or by addition of a unit of styrene followed by coupling with the nitroxide to give the title oligomer. The latter does not propagate further since its alkoxyamine end group does not dissociate into radicals at 60°C. ¹H NMR (90MHz) δ: 0.4-1.3 (C-CH₃), 1.7-2.2 (backbone CH₂), 2.8-3.3 (O-CH₃ next to Ph), 3.6 (O-CH₃), 4.3-4.8 (PhCHON), 5.45 and 6.2 (C=CH₂), 7.3 (ArH).

### Example 32

### Co-Oligomerization of Methyl Methacrylate and Ethyl Acrylate

A degassed solution of N-(2-t-butoxy-1-phenylethoxy)-N,N-di-t-butylamine (64 mg) in ethyl acrylate (4 ml) and methyl methacrylate (1 ml) was heated et 100°C for 1 hr. Evaporation of volatiles gave a colourless foam (0.55 g). The ¹H NMR of the random co-oligomer indicated the presence of an average of 15 ethyl acrylate units (COOCH₂CH₃, δ 3.8-4.3) and 9 methyl methacrylate units (COOCH₃, δ 3.6) per chain, assuming 1 phenyl group (δ 7.2) per chain. Proton counts in the methyl region (δ 0.7-1.4) indicated the presence of the di-t-butylaminoxy end group and it should be attached to an ethyl acrylate unit; based on the known behaviour of these systems, GPC: M̅ₙ=2600, M̅_{w}/M̅ₙ= 1.7.

### Oligomerization of Methyl Methacrylate and Methacrylonitrile:Formation of Macromers

When α-methyl substituted monomers, e.g. methyl methacrylate and methacrylonitrile, are polymerized using alkoxyamines as initiators, termination of the growing chains occurs by transfer of a hydrogen atom from the α-methyl substituent to the nitroxide radical giving rise to polymers having olefinic end groups (macromers) and the corresponding hydroxylamine.

### Example 33

### Preparation of Methyl Methacrylate Macromer of Structure 31

A degassed solution of N-(2-t-butoxy-1-methyl-1-phenylethoxy)-N,N-di-t-butylamine (34 mg) in methyl methacrylate (10 ml) was heated at 50°C for 0.5 hr. Removal of volatiles gave a colourless gum (320 mg) shown by NMR to consist of the title oligomer in which n=27 on average. ¹H NMR (90MHz) δ: 3.65 (C-COOCH₃), 3.7 (CH₂=C-COOCH₃) 5.45 and 6.2. (C=CH₂), 7.25 (ArH).

### Example 34

### Preparation of Methyl Methacrylate Macromers of Structure 32

A. (n=30). A degassed solution of 1-(1-cyano-1-methylethoxy)-4-oxo-2,2,6,6-tetramethylpiperidine (50 mg) in methyl methacrylate (4 ml) was heated at 80°C for 8 hr. Evaporation of volatlies gave the title oligomer as a colourless gum (0.6 g) estimated by NMR to contain approx. 30 monomer units per chain. ¹H NMR (90MHz) δ: 1.35 (CN-C-(CH₃)₂), 3.65 (C-COOCH₃), 3.7 (CH₂=C-COOCH₃), 5.45 and 6.2 (C=CH₂). GPC: M̅ₙ=3200, M̅_{w}/M̅ₙ=1.15. The 1-hydroxy-4-oxo-2,2,6,6-tetramethylpiperidine was isolated by extraction of the title oligomer with light petroleum and identified by comparison with an authentic sample.
B. (n=230). A degasaed solution of 2-(1-cyano-1-methylethoxy)-1,1,3,3-tetraethylisoindoline (34 mg) and 1,1,3,3-tetraethylisoindolin-2-yloxyl (0.25 mg) in methyl methacrylate (10 ml) was heated at 80°C for 2 hr. Removal of volatiles gave the title polymer (2.1 g) having ¹H NMR of poly(methyl methactrylate) with olefinic protons being barely visible at δ 5.45 and 6.2. GPC: M̅ₙ=22700, M̅_{w}/M̅ₙ=1.45.
C. (n=50-60). The above experiment was repeated using a larger amount of nitroxide (5 mg) and increasing the heating time at 80°C to 15 hr to give 0.6 g of polymer. In this case the olefinic protons of the end group were visible in the ¹H NMR (δ 5.45 and 6.2) and from these it was estimated that the polymer was 50-60 units in length. Trituration of the polymer with light petroleum gave a near quantitative yield of 2-hydroxy-1,1,3,3-tetraethylisoindoline, measured by HPLC and UV spectroscopy following its oxidation (in air) to the corresponding nitroxide.

### Example 35

### Preparation of Methacrylonitrile Macromer of Structure 33

A degassed solution of 2-(1-cyano-1-methylethoxy)-1,1,3,3-tetraethylisoindoline (32 mg) and 1,1,3,3-tetraethylisoindolin-2-yloxyl (0.5 mg) in methacrylonitrile (10 ml) was heated at 80° for 4 hr. The glassy residue (200 mg) was extracted with benzene from which, after exposure to air overnight, was shown to contain approx. 25 mg of 1,1,3,3-tetraethylisoindolin-2-yloxyl. The ¹H NMR (90MHz, d₆-acetone) of the polymer showed olefinic protons at δ 6.17 and 6.28 the intensity of which indicated approx. 30 monomer units per chain on average.

### BLOCK COPOLYMERS

The following examples provide further evidence for the "living" nature of the alkoxyamine-initiated polymerizations.

### Example 36

### Preparation of Methyl Acrylate/Ethyl Acrylate AB Block Co-oligomers of Structure (34)

A degassed solution of the methyl acrylate oligomer prepared in Example 26 (160 mg) in ethyl acrylate (3 ml) was heated at 100°C for 0.5 hr. ¹H NMR analysts of the colourless gum (285 mg), obtained on evaporation of volatiles, showed that 19 ethyl acrylate units, per chain on average, had added on to the starting oligo(methyl acrylate). ¹H NMR (250MHz) δ: 1.10 and 1.11 (sharp signals, O-t-butyl), 1.15 (one N-t-butyl, the other is obscured), 1.2-1.3 (O-CH₂CH₃), 3.68 (COOCH₃), 4.0-4.2 (O-CH₂CH₃), 7.1-7.35 (ArH). GPC: M̅ₙ=4300 (M̅_{w}/M̅ₙ=1.7) confirmed the expected increase in molecular weight.

### Example 37

### Preparation of Methyl Acrylate/Styrene Diblock of Structure 35

A degassed solution of the oligomer prepared in Example 26 (100 mg) in styrene (3 ml) was heated at 100°C for 3 hr. At the start of the reaction and after each hour of heating di-t-butylnitroxide (0.5 mg) was added in order to suppress the thermal initiation of styrene. Removal of volatiles gave the title AB block co-oligomer. HPLC fractionation, together with ¹H NMR analysis, proved that the styrene units were attached to the starting methyl acrylate oligomer. ¹H NMR (90MHz) δ: 0.7-1.3 (C-CH₃), 1.3-2.6 (CH₂-CH), 3.3-3.55 (COOCH₃ next to Ar), 3.65 (COOCH₃), 6.3-7.4 (ArH).

### Example 38

### Preparation of Ethyl Acrylate/Methyl Acrylate Diblock of Structure 36

A degassed solution of the ethyl acrylate oligomer of Example 29 (200 mg) in methyl acrylate (10 ml) was heated at 120°C for 1 hr. The colourless gum (460 mg), obtained on removal of volatiles, was shown by NMR to consist of the EA-MA diblock of sturcture 36. ¹H NMR (90MHz) δ: 0.4-1.1 (C-CH₂-CH₃), 1.1-1.4 (COOCH₂CH₃ and C-CH₃) 1.4-2.5 (CH₂-CH), 3.65 (COOCH₃), 4.1 (COOCH₂CH₃), 6.9-7.3 (ArH).

### Example 39

### Preparation of Methylacrylate/Ethylacrylate/Methyl Methacrylate ABC Triblock Copolymer of Structure 37

A degassed solution of the MA-EA diblock of Exmple 36 (80 mg) and di-t-butylnitroxide (0.025 mg) in methyl methacrylate (2 ml) was heated at 100°C for 0.5 hr. The ¹H NMR of the product (220 mg), obtained on evaporation of volatiles, indicated that approx. 60 methyl methacrylate units per chain on average, had added onto the MA-EA diblock to give the triblock of structure 37. ¹H NMR (250MHz) δ: 1.10 and 1.11 (O-t-butyl), 3.60 (COOCH₃ of MMA), 3.68 (COOCH₃ of MA), 4.0-4.2 (O-CH₂CH₃), 7.1-7.35 (ArH). The N-t-butyl signals of the starting material were no longer present. GPC: M̅ₙ=10500 (M̅_{w}/M̅ₙ=2.6) confirmed the expected increase in chain length.

### PREPARATION OF GRAFT COPOLYMERS

### Example 40

### Preparation of Poly(Butadiene-g-Methyl Acrylate) of Structure 38

A degassed solution of polybutadiene containing grafted di-t-butylnitroxide (0.1 g) (Example 16) in tetrachloroethylene (5 ml) and methylacrylate (2 ml) was heated at 95°C for 15 hr. The reaction mixture was added slowly to stirred acetone (20 ml) to give the title graft copolymer. ¹H NMR signals at δ 3.65 (-OCH₃) and 1.0-2.4 (CH₂-CH) confirmed the presence of methyl acrylate grafted onto polybutadiene [δ 2.1 (CH₂-CH₂), 5.4 (CH=CH)] in the ratio of 1 methyl acrylate unit to 6 butadiene units. The ¹H NMR signal at δ 1.2 established that the di-t-butylaminoxy function remained attached to the methyl acrylate chains.

### Example 41

### Preparation of Poly(Isobutyl Methacrylate-g-Ethyl Acrylate) of Structure 39

A degassed solution of poly(isobutyl methacrylate) containing grafted 1,1,3,3-tetramethylisoindolin-2-yloxyl (0.2 g) (Example 17) in ethyl acrylate (5 ml) was heated at 150°C for 2 hr. The polymer was precipitated by addition of the reaction mixture to methanol. ¹H NMR showed the ratio of isobutyl methacrylate (δ 3.7) to ethyl acrylate (δ 4.1) to be 1.3:1 while the signal from the isoindolinoxy function appeared at δ 6.9-7.3.

### Example 42

### A. Prep. of Poly(Styrene-g-Methyl Acrylate) of Structure 40

A degassed solution of the copolymer from Example 20 (120 mg) in methyl acrylate (12 ml) was heated at 100°C for 2 hr. The product was isolated by precipitation from methanol which gave a white powder (98 mg). ¹H NMR δ (CDCl₃): 0.7-1.6 (aliphatic H), 3.2 (OCH₂), 3.7 (OCH₃, from grafted methyl acrylate), 6.3-7.3 (ArH). From the ¹H NMR it was deduced that 3 methyl acrylate units per alkoxyamine were grafted onto the copolymer.

### B. Extending the Methyl Acrylate Grafts

The grafted polymer from Part A (32 mg) was dissolved in methyl acrylate (3 ml), degassed and heated at 120°C for 2 hrs. The product was 42mg of a white powder. H.P.L.C. (reverse phase) analysis of the product using acetonitrile : tetrahydrofuran as solvent (gradient: 90% CH₃CN for 5 min, 90%-50% CH₃CN/15 min) showed that no methyl acrylate homopolymer was present. ¹H NMR δ (CDCl₃): 0.7-1.6 (aliphatic H), 3.7 (OCH₃, from grafted methyl acrylate), 6.3-7.3 (ArH). From the integrals of the ¹H NMR spectrum it was calculated that there are approximately 18 methyl acrylate units present per alkoxyamine.

### Example 43

### Preparation of Poly(Styrene-g-Methyl Methacrylate) of Structure 41

A degassed solution of the copolymer from Example 20 (96 mg) in methyl methacrylate (2.1 g, 21.1 mmol) was heated at 100°C for 1 hr. The monomer was removed under vacuum to yield a glassy solid (160mg). ¹H NMR δ (CDCl₃): 0.9-1.9 (aliphatic H), 3.2 (CH₂O), 3.4-3.7 (CH₃O, from grafted methyl methacrylate), 6.62-7.1 (ArH). From the ¹H NMR integrals it was calculated that 6-7 methyl methacrylate units were grafted for each alkoxyamine.

### Example 44

### Preparation of Poly(Methyl Methacrylate-g-Styrene) of Structure 42

A degassed solution of the copolymer from Example 21 (100mg) in styrene (2ml) was heated at 100°C for 4hr. The product was isolated by chromatography using silica gel and light petroleum: ethyl acetate (1:1) as eluent. This gave the product free from any homopolymer as a white powder (180mg). ¹H NMR δ (CDCl₃): 0.9-2.0 (aliphatic H), 3.6 (OCH₃, from backbone methyl methacrylate), 6.3-7.3 (ArH, from grafted styrene). From the integrals of ¹H NMR it was calculated that 12 styrene units had been incorporated per alkoxyamine.

### Example 45

### Preparation of Poly(Methyl Methacrylate-g-Methyl Methacrylate) of Structure 43

A degassed solution of the poly(methyl methacrylate-co-alkoxyamine) from Example 21 (100mg) in methyl methacrylate (2ml) was heated at 100°C for 0.5 hr. The excess monomer was removed under vacuum to yield (284mg) of a white powder. ¹H NMR δ (CDCl₃): 0.7-2.1 (aliphatic H), 3.6 (OCH₃).

The amount of grafted methyl methacrylate was calculated from the weight of product obtained as the ¹H NMR was not useful for this purpose. This method suggested that 12 methyl methacrylate units were grafted onto the backbone per alkoxyamine unit.

### Example 46

### Preparation of Poly(Methyl Methacrylate-g-Methyl Acrylate) of Structure 44

A degassed solution of the poly(methyl methacrylate-co-alkoxyamine) from Example 21 in methyl acrylate (2ml) was heated at 100°C for 2hr. The monomer was removed under vacuum to yield (142mg) of a white powder. The amount of grafted methyl acrylate was calculated as for example 10 and it was found that 3 methyl acrylate units had been incorporated for each alkoxyamine.

¹H NMR δ (CDCl₃): 0.6-2.2 (aliphatic H), 3.6 (OCH₃, from methyl methacrylate), 3.7 (OCH₃ from methyl acrylate).

### Example 47

### Preparation of Poly(Methyl Acrylate-g-Styrene) of Structure 45

A degassed solution of the poly(methyl acrylate-co-alkoxyamine) from Example 22 (87.5mg) in styrene (2.3g) was heated at 100°C for 2hr. The product was precipitated from methanol and chromatographed on silica gel using benzene to remove the styrene homopolymer and then ethyl acetate to collect the product (50mg). ¹H NMR δ (CDCl₃): 0.9-2.3 (aliphatic H) 3.6 (OCH₃ from methyl acrylate backbone), 6.5-7.0 (ArH from grafted styrene). From the integrals of the ¹H NMR it was calculated that 2-3 styrene units were grafted for each alkoxyamine.

### REACTIONS OF THE AMINOXY END GROUPS

### Example 48

### Conversion of Aminoxy End Group to Hydroxy End Group by Zinc-Acetic Acid Reduction (Scheme 3)

The aminoxy-terminated methyl acrylate oligomer of Example 23 Part B (100 mg) and zinc dust (0.2 g) in acetic acid (5 ml) was heated at reflux for 2 hr with 3 further additions of zinc dust (0.1 g each) during the course of the reaction. The residue obtained after filtration and removal of volatiles was dissolved in ethyl acetate and extracted with dilute hydrochloric acid. A near-quantitative yield of 1,1,3,3-tetraethylisoindoline was recovered from the acidic layer by basification and extraction. Evaporation of the ethyl acetate solution gave the hydroxyl-terminated oligomer (Scheme 3) in which the ¹H NMR signal of NO-CH-COOCH₃ at δ 4.2-4.6 was replaced by a signal at δ 4.7-6.1, attributed to the HO-CH-COOCH₃ group.

### Example 49

### Replacement of Aminoxy End Group by H: Reduction with a Thiol (Scheme 4)

A degassed solution of N-(2-t-butoxy-1-phenylethoxy)-N,N-di-t-butylamine (Example 15) (66 mg) in ethanethiol (1 ml) was heated at 80°C for 16 hr. ¹H NMR analysis of the residue obtained on removal of excess thiol showed the presence of 1-t-butoxy-2-phenylethane, N,N-di-t-butylhydroxylamine and diethyl disulphide. 1-t-Butoxy-2-phenylethane was isolated in 80% yield by chromatography on silica gel. ¹H NMR (90 MHz), δ (CCl₄): 1.18 (9H, s, O-t-butyl), 2.8 (2H, t, CH₂Ar), 3.5 (2H, t, CH₂O), 7.2 (5H, s, ArH).

### Example 50

### Preparation of H-Terminated Methyl Acrylate Oligomer of Structure 46

A degassed solution of aminoxy-terminated methyl acrylate oligomer of Example 23 Part C (100 mg) in benzene (5 ml) and ethanethiol (1 ml) was heated at 100°C for 16 hrs. The reaction mixture was concentrated and diluted with light petroleum to give a gum the ¹H NMR of which showed the absence of the signal at δ 4.2-4.6 (NO-CH-COOCH₃) as well as those of the isoindoline moiety (δ 0.3-1.2 and 6.8-7.4). By analogy with Example 49, the product was considered to have structure 46.

## Claims

1. A method for the production of a polymer or a copolymer, including an oligomer, by free radical polymerisation of an unsaturated monomer comprising heating with the monomer an initiator compound having the general structure of formula I 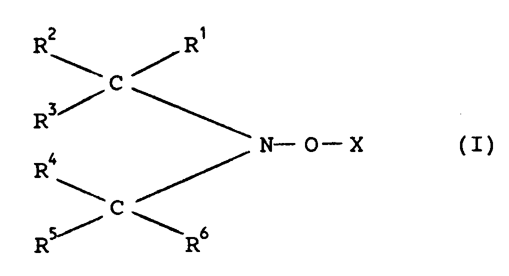 wherein X represents a group having at least one carbon atom and is such that the free radical X^{.} is capable of polymerising the unsaturated monomer by free radical polymerisation, and the radical functionality resides on the or one of the carbon atoms,
R¹, R², R⁵ and R⁶ represent the same or different straight chain or branched substituted or unsubstituted alklyl groups of a chain length sufficient to provide steric hindrance and weakening of the O-X bond, and
R³ and R⁴ represent the same or different straight chain or branched substituted alkyl groups or R³CNCR⁴ may be part of a cyclic structure which may have fused with it another saturated or aromatic ring, the cyclic structure or aromatic ring being optionally substituted;
such heating to be sufficient to cause scission of the O-X bond to form two free radicals: X^{.} being capable of initiating polymerisation; and the nitroxide radical of formula II 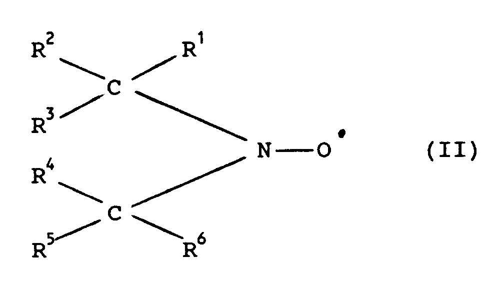 which does not initiate any substantial free radical polymerisation of the unsaturated monomer but which acts as a reversible terminator.

2. A method according to claim 1 in which the scission of O-X bond occurs at a temperature of less than 200°C.

3. A method according to claim 2 in which the scission of the O - X bond occurs at a temperature of less than 150°C.

4. A method according to any one of the preceding claims in which R¹, R², R⁵ and R⁶ are methyl, ethyl, propyl, butyl, isopropyl, isobutyl, t-butyl, neo-pentyl, benzyl or substituted groups thereof.

5. A method according to any one of the preceding claims in which R³ and R⁴ are methyl, ethyl, propyl, butyl, isopropyl, isobutyl, t-butyl, pentyl, octadecyl or if R³CNCR⁴ is part of a cyclic structure, the cyclic structure is 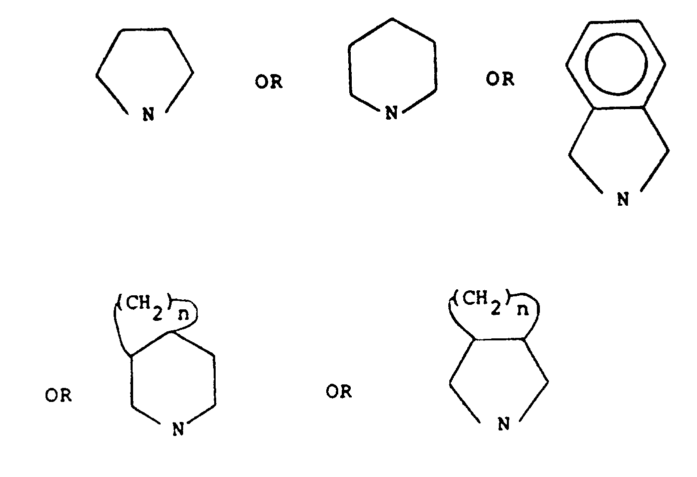 wherein n is an integer from 1 to 10, including such cyclic groups when substituted.

6. A method according to claim 5 in which n is an integer of from 1 to 6.

7. A method according to any one of claims 1 to 6 in which the radical derived from X is of the formula 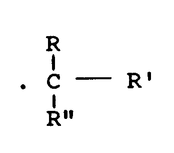 Wherein R, R' and R'' are the same or different and are selected from hydrogen, alkyl, phenyl, cyano, carboxylic acid or carbocyclic group or substituted groups thereof.

8. A method according to claim 7 in which n is t-butyl, cyanoisopropyl, phenyl or methyl.

9. A method for making a graft copolymer comprising two stages comprising forming a polymer with pendent alkoxyamine groups of the general structure of formula I, 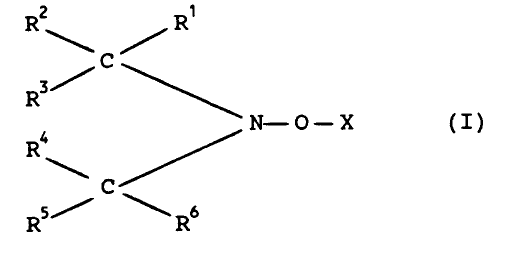 in which the R groups and X are as defined above, the polymer having the group X attached to or part of the backbone polymer chains, and adding a further monomer followed by heating to form a graft copolymer, by a method according to any preceding claim.

10. A method according to claim 9 in which the polymerisation of a graft copolymer occurs as a free radical polymerisation which propagates in a step wise fashion such that substantially no homopolymerisation of the added monomer occurs.

11. A polymer, including an oligomer, having at least one initiator group derived from X and at least one oxyamine group, wherein the polymer is derived by a method according to any of claims 1 to 10.

12. A polymer according to claim 11 in which the at least one oxyamine group is a terminal oxyamine group.

13. A polymer according to claim 11 or claim 12 which is a graft copolymer or a block copolymer.

14. A process in which a polymer according to claim 12 having a terminal oxyamine group is reacted so that the oxyamine group and an adjacent group dissociate to form an unsaturated terminal group.

15. A process according to claim 11 in which the unsaturated terminal group is a group.

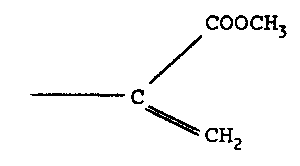

16. A process in which a polymer according to claim 9 having a terminal oxyamine group is reacted so that the oxyamine group is reduced to form a terminal hydroxy group or a terminal hydrogen atom.

17. An initiator compound for a process for production of polymer by free radical polymerisation of a suitable unsaturated monomer, said compound having the general structure of formula Ia 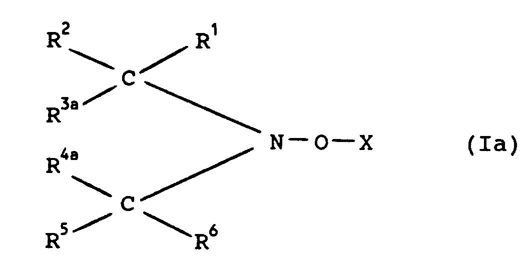 wherein X represents a group having at least one carbon atom and is such that the free radical X^{.} is capable of polymerising the unsaturated monomer by free radical polymerisation, and the radical functionality resides on the or one of the carbon atoms,
R¹, R², R⁵ and R⁶ represent the same or different straight chain or branched substituted or unsubstituted alkyl groups of a chain length sufficient to provide steric hindrance and weakening of the O-X bond, and
R^{3a}CNCR^{4a} are part of a cyclic structure which may have fused with it another saturated or aromatic ring, the cyclic structure or aromatic ring being optionally substituted.

18. A compound according to claim 17 in which the cyclic structure is 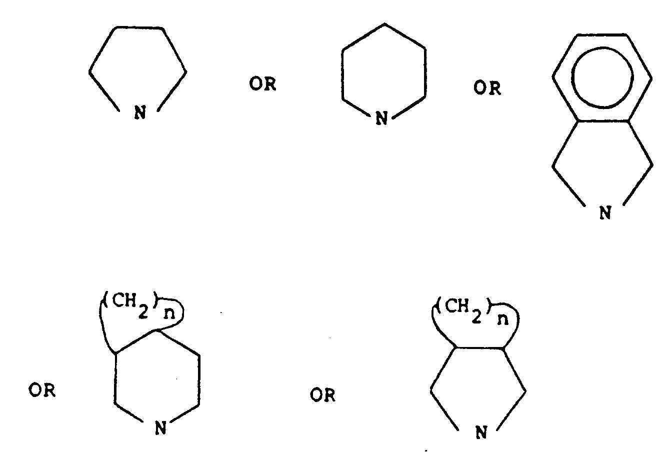 wherein n is an integer from 1 to 10, including such cyclic groups when substituted.

19. A compound according to claim 18 in which n is from 1 to 6.

20. A compound according to any of claims 17 to 19 in which the scission of O-X bond occurs at a temperature of less than 200°C.

21. A compound according to claim 20 in which the scission of the O - X bond occurs at a temperature of less than 150°C.

22. A compound according to any of claims 17 to 21 in which R¹, R², R⁵ and R⁶ are methyl, ethyl, propyl, butyl, isopropyl, isobutyl, t-butyl, neo-pentyl, benzyl or substituted groups thereof.

23. A compound according to any of claims 17 to 22 in which the radical derived from X is of the formula 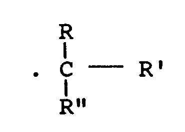 Wherein R, R' and R'' are the same or different and are selected from hydrogen, alkyl, phenyl, cyano, carboxylic acid or carboxcyclic group or substituted groups thereof.

24. A compound according to claim 23 in which X is t-butyl, cyanoisopropyl, phenyl or methyl.

## Patentansprüche

1. Verfahren zur Herstellung eines Polymeren oder Mischpolymeren einschließlich eines Oligomeren durch Radikalkettenpolymerisation eines ungesättigten Monomeren durch Erhitzen einer Anspringverbindung der allgemeinen Strukturformel I 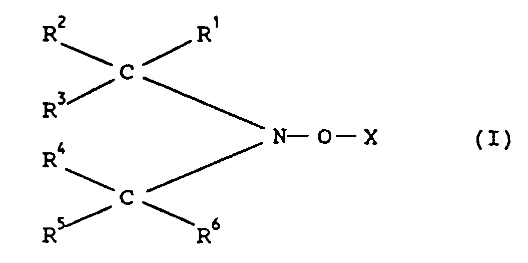 worin bedeuten:
X eine Gruppe mit mindestens einem Kohlenstoffatom dergestalt, daß das freie Radikal X^{.} zur Polymerisation des ungesättigten Monomeren durch Radikalkettenpolymerisation fähig ist und die Radikalfunktionalität bei dem oder einem der Kohlenstoffatome liegt;
R¹, R², R⁵ und R⁶ dieselben oder verschiedene gerad- oder verzweigtkettige, gegebenenfalls substituierte Alkylgruppen einer für eine sterische Hinderung und zur Schwächung der O-X-Bindung ausreichenden Kettenlänge und
R³ und R⁴ dieselben oder verschiedene gerad- oder verzweigtkettige substituierte Alkylgruppen oder R³CNCR⁴ einen Teil einer zyklischen Struktur mit einem gegebenenfalls ankondensierten anderen gesättigten oder aromatischen Ring, wobei die zyklische Struktur oder der aromatische Ring gegebenenfalls substituiert sind,
(zusammen) mit dem Monomeren, wobei das Erwärmen ausreicht, um eine Spaltung der O-X-Bindung unter Bildung von zwei freien Radikalen, nämlich X^{.} mit der Fähigkeit zur Einleitung der Polymerisation und des Nitroxidradikals der Formel II 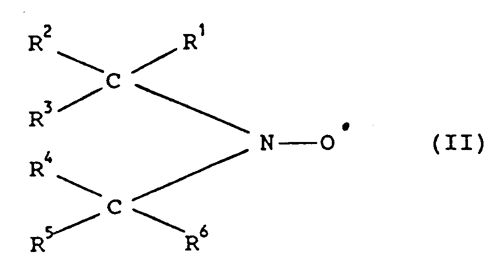 welches keine nennenswerte Radikalkettenpolymerisation des ungesättigten Monomeren einleitet, jedoch als reversibles Kettenabbruchmittel bzw. reversibler Terminator wirkt, herbeizuführen.

2. Verfahren nach Anspruch 1, bei welchem die Spaltung der O-X-Bindung bei einer Temperatur von weniger als 200°C erfolgt.

3. Verfahren nach Anspruch 2, bei welchem die Spaltung der O-X-Bindung bei einer Temperatur von weniger als 150°C erfolgt.

4. Verfahren nach einem der vorhergehenden Ansprüche, bei welchem R¹, R², R⁵ und R⁶ für Methyl-, Ethyl-, Propyl-, Butyl-, Isopropyl-, Isobutyl-, tert.-Butyl-, neo-Pentyl-, Benzyl- oder substituierte Gruppen hiervon stehen.

5. Verfahren nach einem der vorhergehenden Ansprüche, bei welchem R³ und R⁴ für Methyl, Ethyl, Propyl, Butyl, Isopropyl, Isobutyl, tert.-Butyl, Pentyl, Octadecyl oder - sofern R³CNCR⁴ einen Teil einer zyklischen Struktur bildet - die zyklische Struktur 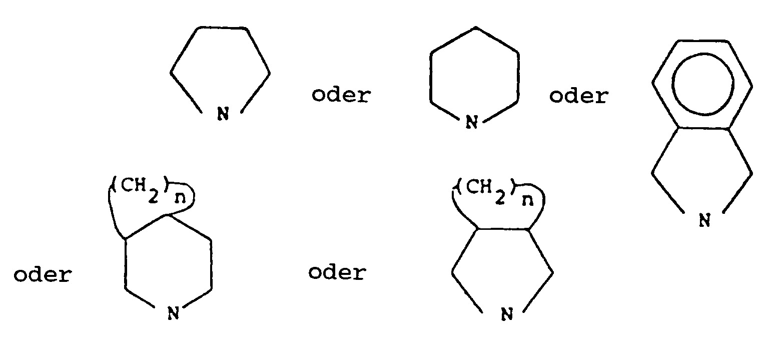 mit n gleich einer ganzen Zahl von 1 bis 10 einschließlich substituierter derartiger zyklischer Gruppen stehen.

6. Verfahren nach Anspruch 5, wobei n für eine ganze Zahl von 1 bis 6 steht.

7. Verfahren nach einem der Ansprüche 1 bis 6, bei welchem das von X stammende Radikal der Formel: 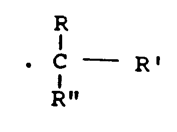 worin R, R'und R'' gleich oder verschieden sind und für Wasserstoff oder eine Alkyl-, Phenyl-, Cyano-, Carbonsäure- oder carbozyklische Gruppe oder substituierte Gruppe hiervon stehen, entspricht.

8. Verfahren nach Anspruch 7, worin n für tert.-Butyl, Cyanoisopropyl, Phenyl oder Methyl steht.

9. Verfahren zur Herstellung eines Pfropfmischpolymeren in zwei Stufen durch Ausbilden eines Polymeren mit daran hängenden Alkoxyamingruppen der allgemeinen Strukturformel I 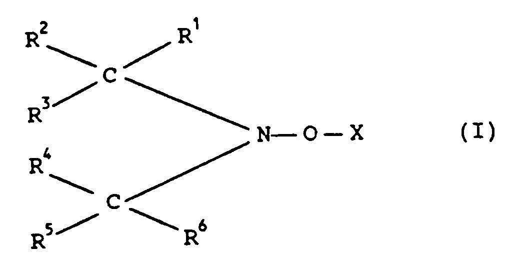 worin die Gruppen R und X der angegebenen Bedeutung entsprechen, d.h. des Polymeren mit der an den oder einem Teil der polymeren Rückgratketten hängenden Gruppe X und Zugabe eines weiteren Monomeren unter anschließendem Erwärmen zur Bildung eines Pfropfmischpolymeren nach einem Verfahren gemäß einem der vorhergehenden Ansprüche.

10. Verfahren nach Anspruch 9, bei welchem die Polymerisation eines Pfropfmischpolymeren als Radikalkettenpolymerisation erfolgt, wobei letztere derart stufenweise voranschreitet, daß praktisch keine Homopolymerisation des zugesetzten Monomeren erfolgt.

11. Polymeres einschließlich eines Oligomeren mit mindestens einer von X herrührenden Anspringgruppe und mindestens einer Oxyamingruppe, wobei das Polymere aus einem Verfahren nach einem der Ansprüche 1 bis 10 herrührt.

12. Polymeres nach Anspruch 11, bei welchem mindestens eine Oxyamingruppe aus einer endständigen Oxyamingruppe besteht.

13. Polymeres nach Anspruch 11 oder 12, bei welchem es sich um ein Pfropfmischpolymeres oder ein Blockmischpolymeres handelt.

14. Verfahren, bei welchem ein Polymeres nach Anspruch 12 mit einer endständigen Oxyamingruppe derart umgesetzt wird, daß die Oxyamingruppe und eine benachbarte Gruppe unter Bildung einer ungesättigten endständigen Gruppe dissoziieren.

15. Verfahren nach Anspruch 11, bei welchem es sich bei der ungesättigten endständigen Gruppe um eine 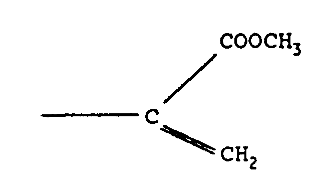 -gruppe handelt.

16. Verfahren, bei welchem ein Polymeres nach Anspruch 9 mit einer endständigen Oxyamingruppe derart umgesetzt wird, daß die Oxyamingruppe unter Bildung einer endständigen Hydroxygruppe oder eines endständigen Wasserstoffatoms reduziert wird.

17. Anspringverbindung für ein Verfahren zur Herstellung eines Polymeren durch Radikalkettenpolymerisation eines geeigneten ungesättigten Monomeren, der allgemeinen Strukturformel Ia 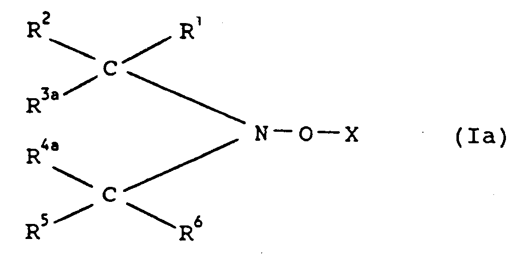 worin bedeuten:
X eine Gruppe mit mindestens einem Kohlenstoffatom dergestalt, daß das freie Radikal X^{.} zur Polymerisation des ungesättigten Monomeren durch Radikalkettenpolymerisation fähig ist und die Radikalfunktionalität bei dem oder einem der Kohlenstoffatome liegt;
R¹, R², R⁵ und R⁶ dieselben oder verschiedene gerad- oder verzweigtkettige, gegebenenfalls substituierte Alkylgruppe einer für eine sterische Hinderung und zur Schwächung der O-X-Bindung ausreichenden Kettenlänge und R^{3a}CNCR^{4a} einen Teil einer zyklischen Struktur mit einem gegebenenfalls ankondensierten anderen gesättigten oder aromatischen Ring, wobei die zyklische Struktur oder der aromatische Ring gegebenenfalls substituiert sind.

18. Verbindung nach Anspruch 17, bei welcher die zyklische Struktur aus 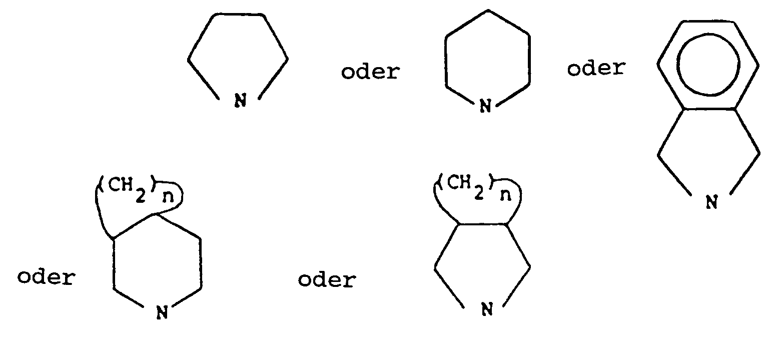 mit n gleich einer ganzen Zahl von 1 bis 10 einschließlich substituierter derartiger zyklischer Gruppen besteht.

19. Verbindung nach Anspruch 18, worin n = 1 bis 6.

20. Verbindung nach einem der Ansprüche 17 bis 19, bei welcher die Spaltung der O-X-Bindung bei einer Temperatur von weniger als 200°C erfolgt.

21. Verbindung nach Anspruch 20, bei welcher die Spaltung der O-X-Bindung bei einer Temperatur von weniger als 150°C erfolgt.

22. Verbindung nach einem der Ansprüche 17 bis 21, bei welchem R¹, R², R⁵ und R⁶ für Methyl-, Ethyl-, Propyl-, Butyl-, Isopropyl-, Isobutyl-, tert.-Butyl-, neo-Pentyl-, Benzyl- oder substituierte Gruppen hiervon stehen.

23. Verbindung nach einem der Ansprüche 17 bis 22, bei welchem das von X stammende Radikal der Formel: 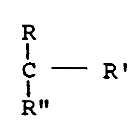 worin R, R'und R'' gleich oder verschieden sind und für Wasserstoff oder eine Alkyl-, Phenyl-, Cyano-, Carbonsäure- oder carbozyklische Gruppe oder substituierte Gruppe hiervon stehen, entspricht.

24. Verbindung nach Anspruch 23, worin X für tert.-Butyl, Cyanoisopropyl, Phenyl oder Methyl steht.

## Revendications

1. Procédé de préparation d'un polymère ou d'un copolymère, y compris un oligomère, par polymérisation, à l'aide de radicaux libres, d'un monomère insaturé, selon lequel on chauffe avec le monomère, un composé initiateur correspondant à la structure générale de formule I : 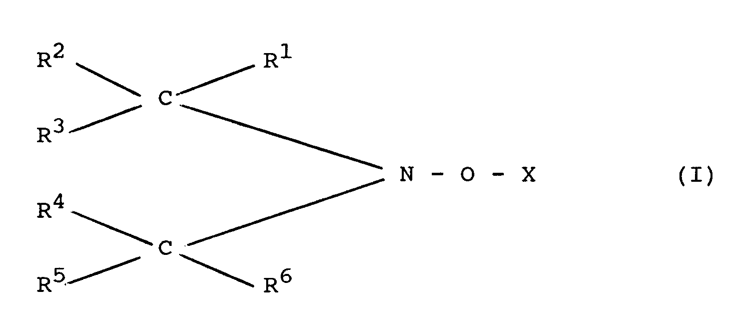 dans laquelle X représente un groupe comportant au moins un atome de carbone, ce composé étant tel que le radical libre X^{.} est capable de polymériser le monomère insaturé par polymérisation de radicaux libres, et la fonction radicalaire se trouve sur le ou l'un des atomes de carbone,
R¹, R², R⁵ et R⁶ représentent des groupes alkyle identiques ou différents substitués ou non substitués ramifiés ou à chaîne linéaire, d'une longueur de chaîne suffisante pour ménager un encombrement stérique et affaiblir la liaison O-X, et
R³ et R⁴ représentent des groupes alkyle substitués identiques ou différents ramifiés ou à chaîne linéaire, ou R³CNCR⁴ peut constituer une partie d'une structure cyclique qui peut être condensée avec un autre cycle saturé ou aromatique, la structure cyclique ou le cycle aromatique étant éventuellement substitué ;
ledit chauffage étant suffisant pour provoquer la coupure de la liaison O-X et former deux radicaux libres : X^{.} qui est capable d'initier la polymérisation ; et le radical nitroxyde de formule II : 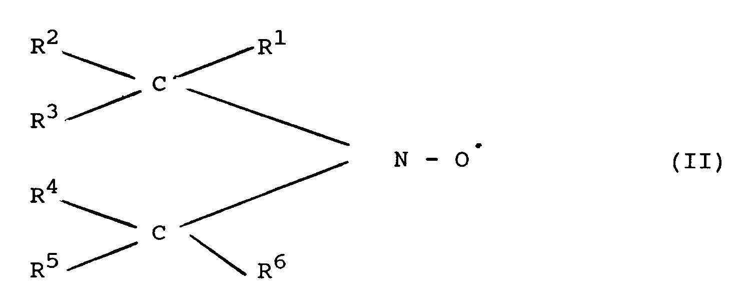 qui n'initie pas de polymérisation, à l'aide de radicaux libres notable, du monomère insaturé, mais qui agit comme agent de terminaison réversible.

2. Procédé selon la revendication 1, dans lequel la coupure de la liaison O-X a lieu à une température inférieure à 200 °C.

3. Procédé selon la revendication 2, dans lequel la coupure de la liaison O-X, a lieu à une température inférieure à 150 °C.

4. Procédé selon l'une quelconque des revendications précédentes, dans lequel R¹, R², R⁵ et R⁶ représentent des groupes méthyle, éthyle, propyle, butyle, isopropyle, isobutyle, t-butyle, néopentyle, benzyle ou des groupes substitués dérivés de ceux-ci.

5. Procédé selon l'une quelconque des revendications précédentes, dans lequel R³ et R⁴, représentent des groupes méthyle, éthyle, propyle, butyle, isopropyle, isobutyle, t-butyle, pentyle, octadécyle, ou si R³CNCR⁴ est une partie d'une structure cyclique, la structure cyclique est : 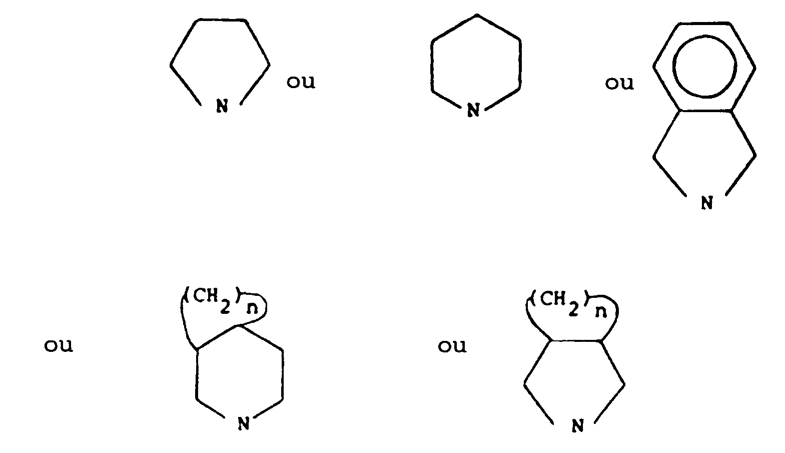 dans laquelle n représente un entier de 1 à 10, y compris ces groupes cycliques lorsqu'ils sont substitués.

6. Procédé selon la revendication 5, dans lequel n représente un entier de 1 à 6.

7. Procédé selon l'une quelconque des revendications 1 à 6, dans lequel le radical dérivé de X, correspond à la formule : 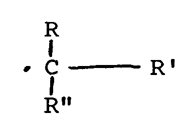 dans laquelle R, R' et R'' sont identiques ou différents, et ils sont choisis parmi un atome d'hydrogène, les groupes alkyle, phényle, cyano, acide carboxylique, ou un groupe carbocyclique ou les groupes substitués dérivés de ceux-ci.

8. Procédé selon la revendication 7, dans lequel X représente un groupe t-butyle, cyanoisopropyle, phényle ou méthyle.

9. Procédé de préparation d'un copolymère greffé, comprenant deux étapes consistant en la formation d'un polymère avec des groupes alkoxyamine latéraux correspondant à la structure générale de formule I : 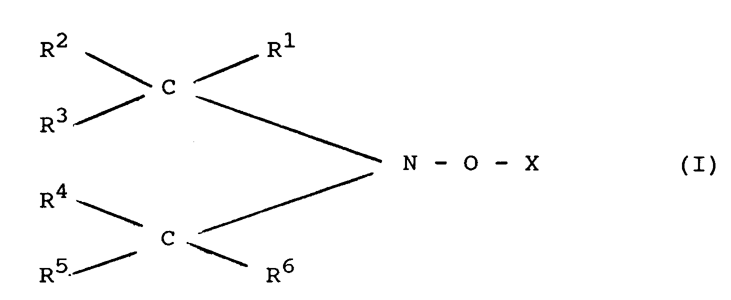 dans laquelle les groupes R et X sont tels que définis ci-dessus, le polymère comportant le groupe X lié ou intégré dans les chaînes du squelette polymère, et en l'addition d'un autre monomère suivie par une opération de chauffage pour former un copolymère greffé, selon un procédé défini dans l'une quelconque des revendications précédentes.

10. Procédé selon la revendication 9, dans lequel la polymérisation d'un copolymère greffé est effectuée par polymérisation de radicaux libres, qui se propage **par étapes,** de telle sorte qu'il ne se produit pratiquement pas d'homopolymérisation du monomère ajouté.

11. Polymère, y compris un oligomère, comportant au moins un groupe initiateur dérivé du groupe X, et au moins un groupe oxyamine, dans lequel le polymère est obtenu selon un procédé défini dans l'une quelconque des revendications 1 à 10.

12. Polymère selon la revendication 11, dans lequel le ou chaque groupe oxyamine, est un groupe oxyamine terminal.

13. Polymère selon la revendication 11 ou 12, qui est un copolymère greffé ou un copolymère séquencé.

14. Procédé dans lequel on fait réagir un polymère selon la revendication 12 comportant un groupe oxyamine terminal, de telle façon que le groupe oxyamine et un groupe adjacent se dissocient pour former un groupe terminal insaturé.

15. Procédé selon la revendication 11, dans lequel le groupe terminal insaturé, est un groupe :

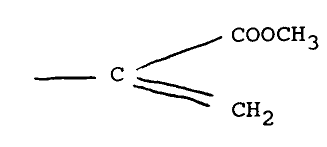

16. Procédé dans lequel on fait réagir un polymère selon la revendication 9 comportant un groupe oxyamine terminal, de telle façon que le groupe oxyamine soit réduit pour former un groupe hydroxy terminal ou un atome d'hydrogène terminal.

17. Composé initiateur pour mettre en oeuvre un procédé de préparation d'un polymère par polymérisation, à l'aide de radicaux libres, d'un monomère insaturé approprié, ce composé correspondant à la structure générale de formule Ia : 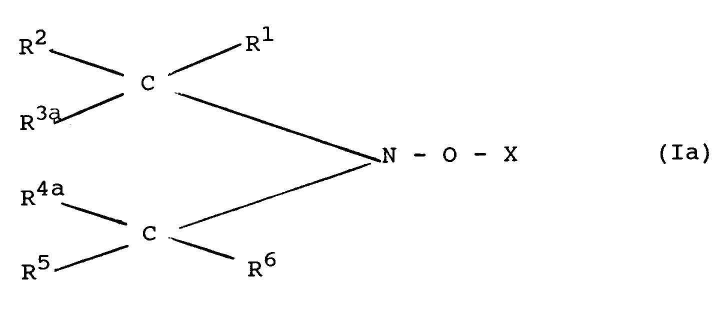 dans laquelle X représente un groupe comportant au moins un atome de carbone, et ce composé étant tel que le radical libre X^{.} soit capable de polymériser le monomère insaturé par polymérisation de radicaux libres, et la fonction radicalaire se trouve sur le ou l'un des atomes de carbone,
R¹, R², R⁵ et R⁶ représentent des groupes alkyle identiques ou différents substitués ou non substitués ramifiés ou à chaîne linéaire, d'une longueur de chaîne suffisante pour ménager un encombrement stérique et affaiblir la liaison O-X, et
R^{3a}CNCR^{4a} fait partie d'une structure cyclique qui peut être condensée avec un autre cycle saturé ou aromatique, la structure cyclique ou le cycle aromatique étant éventuellement substitué.

18. Composé selon la revendication 17, dans lequel la structure cyclique, est : 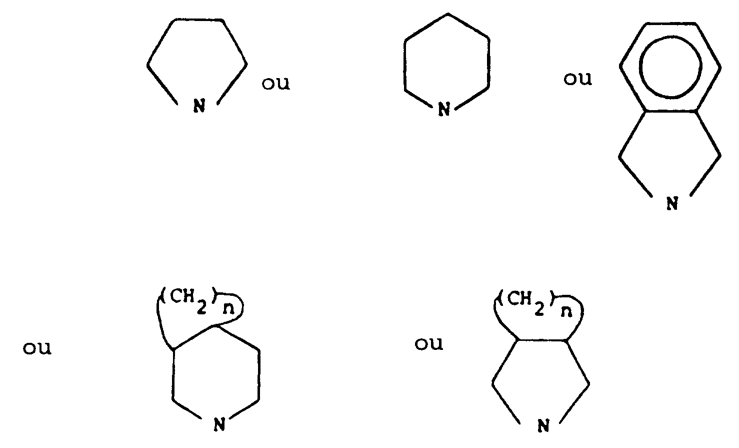 dans laquelle n représente un entier de 1 à 10, y compris ces groupes cycliques lorsqu'ils sont substitués.

19. Composé selon la revendication 18, dans lequel n varie de 1 à 6.

20. Composé selon l'une quelconque des revendications 17 à 19, dans lequel la coupure de la liaison O-X a lieu à une température inférieure à 200 °C.

21. Composé selon la revendication 20, dans lequel la coupure de liaison O-X a lieu à une température inférieure à 150 °C.

22. Composé selon l'une quelconque des revendications 17 à 21, dans lequel R¹, R², R⁵ et R⁶ représentent des groupes méthyle, éthyle, propyle, butyle, isopropyle, isobutyle, t-butyle, néo-pentyle, benzyle ou des groupes substitués dérivés de ceux-ci.

23. Composé selon l'une quelconque des revendications 17 à 22, dans lequel le radical dérivé du groupe X, correspond à la formule : 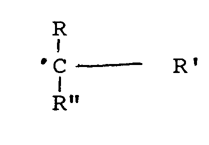 dans laquelle R, R' et R'' sont identiques ou différents, et sont choisis parmi un atome d'hydrogène, un groupe alkyle, phényle, cyano, acide carboxylique, ou un groupe carbocyclique ou les groupes substitués dérivés de ceux-ci.

24. Composé selon la revendication 23, dans lequel X représente un groupe t-butyle, cyanoisopropyle, phényle ou méthyle.
